# EUROPEAN PATENT APPLICATION

(11) **EP 4 671 099 A1**
(43) Date of publication of application: **31.12.2025**
(21) Application number: 23930744.0
(22) Date of filing: 08.09.2023
(51) Int. Cl.: B62J 41/00, B62J 43/16, B62K 11/04

(54) **ELECTRIC SADDLE-TYPE VEHICLE**

(30) Priority: 24.03.2023 JP 2023048100
(71) Applicant: YAMAHA HATSUDOKI KABUSHIKI KAISHA, Iwata-shi, Shizuoka 438-8501 (JP)
(72) Inventor: EBIHARA, Yuya, Iwata-shi, Shizuoka 438-8501 (JP); MIYASHIRO, Shidehiko, Iwata-shi, Shizuoka 438-8501 (JP); JOZAKI, Keishi, Iwata-shi, Shizuoka 438-8501 (JP)
(74) Representative: Grünecker Patent- und Rechtsanwälte PartG mbB
(86) International application number: PCT/JP2023/032848
(87) International publication number: WO 2024/202112

(57) **Abstract**

In a straddled electric vehicle 1, a main frame 5 extends rearward from a head pipe 4. The down frame 6 extends downward from the head pipe 4. The down frame 6 is disposed below the main frame 5 in vehicle side view. A reinforcing frame 12 is connected to the main frame 5 and the down frame 6. At least a part of a battery 41 overlaps the main frame 5 in vehicle side view. A right radiator 61R is disposed rightward of the reinforcing frame 12. A left radiator 61L is disposed leftward of the reinforcing frame 12. At least a part of the right radiator 61R overlaps the reinforcing frame 12 in vehicle side view. At least a part of the left radiator 61L overlaps the reinforcing frame 12 in vehicle side view.

## Description

### Technical Field

The present invention relates to a straddled electric vehicle.

### Background Art

Patent Literature 1 discloses a straddled electric vehicle. The straddled electric vehicle includes a head pipe, a main frame, a down frame, and a reinforcing frame. The main frame extends rearward from the head pipe. The down frame extends downward from the head pipe. The reinforcing frame is connected to the main frame and the down frame.

The straddled electric vehicle includes a front fork and a front wheel. The front fork is supported by the head pipe. The front fork extends downward and forward. The front wheel is supported by a lower part of the front fork.

The straddled electric vehicle includes a battery, a right radiator, and a left radiator. The battery overlaps the main frame in side view of the straddled electric vehicle. The right radiator is disposed rightward of the down frame. The left radiator is disposed leftward of the down frame. The right radiator and the left radiator are each disposed in front of the reinforcing frame. The right radiator and the left radiator each do not overlap the reinforcing frame in side view of the straddled electric vehicle.

### Citation List

### Patent Literature

Patent Literature 1: JP 2020-50175 A

### Summary of Invention

### Technical Problem

An entirety of the right radiator is disposed more forward than an entirety of the reinforcing frame. An entirety of the left radiator is disposed more forward than the entirety of the reinforcing frame. Therefore, the right radiator and the left radiator each may interfere with other components of the straddled electric vehicle. The other components of the straddled electric vehicle are, for example, a front fork. That is, the right radiator and the left radiator each may interfere with the front fork.

The present invention has been made in view of such circumstances, and an object thereof is to provide a straddled electric vehicle including a right radiator and a left radiator installed at appropriate positions.

### Solution to Problem

In order to achieve such an object, the present invention has the following configuration.

That is, the present invention is a straddled electric vehicle including:
a head pipe;
a main frame extending rearward from the head pipe;
a down frame extending downward from the head pipe and disposed below the main frame in side view of the straddled electric vehicle;
a reinforcing frame connected to the main frame and the down frame;
a battery at least a part of which overlaps the main frame in the side view of the straddled electric vehicle;
a right radiator disposed rightward of the reinforcing frame; and
a left radiator disposed leftward of the reinforcing frame, wherein
at least a part of the right radiator overlaps the reinforcing frame in side view of the straddled electric vehicle, and
at least a part of the left radiator overlaps the reinforcing frame in side view of the straddled electric vehicle.

The straddled electric vehicle includes a head pipe, a main frame, a down frame, and a reinforcing frame. The main frame extends rearward from the head pipe. The down frame extends downward from the head pipe. The down frame is disposed below the main frame in side view of the straddled electric vehicle. The reinforcing frame is connected to the main frame and the down frame. Therefore, the reinforcing frame improves the rigidity of the main frame and the down frame.

The straddled electric vehicle includes a battery, a right radiator, and a left radiator. At least a part of the battery overlaps the main frame in side view of the straddled electric vehicle. The right radiator is disposed rightward of the reinforcing frame. The left radiator is disposed leftward of the reinforcing frame. Here, at least a part of the right radiator overlaps the reinforcing frame in side view of the straddled electric vehicle. Therefore, interference between the right radiator and other components of the straddled electric vehicle is appropriately prevented. Similarly, at least a part of the left radiator overlaps the reinforcing frame in side view of the straddled electric vehicle. Therefore, interference between the left radiator and other components of the straddled electric vehicle is also appropriately prevented. Thus, the right radiator and the left radiator are each installed at appropriate positions.

As described above, the present straddled electric vehicle includes the right radiator and the left radiator installed at appropriate positions.

In the straddled electric vehicle described above, it is preferred that
the reinforcing frame has a front end,
an entirety of the right radiator is disposed more rearward than the front end of the reinforcing frame, and
an entirety of the left radiator is disposed more rearward than the front end of the reinforcing frame.

Therefore, interference between the right radiator and other components of the straddled electric vehicle is more appropriately prevented. Similarly, interference between the left radiator and other components of the straddled electric vehicle is more appropriately prevented. Thus, the right radiator and the left radiator are each installed at more appropriate positions.

In the straddled electric vehicle described above, it is preferred that
the right radiator does not overlap with the reinforcing frame in front view of the straddled electric vehicle, and
the left radiator does not overlap with the reinforcing frame in front view of the straddled electric vehicle.

Therefore, interference between the right radiator and the reinforcing frame is reliably prevented. Similarly, interference between the left radiator and the reinforcing frame is also reliably prevented. Thus, the right radiator and the left radiator are each installed at more appropriate positions.

In the straddled electric vehicle described above, it is preferred that
the entirety of the right radiator is disposed more rightward than an entirety of the reinforcing frame, and
the entirety of the left radiator is disposed more leftward than the entirety of the reinforcing frame.

Therefore, the right radiator does not suitably overlap the reinforcing frame in front view of the straddled electric vehicle. Similarly, the left radiator does not suitably overlap the reinforcing frame in front view of the straddled electric vehicle.

In the straddled electric vehicle described above, it is preferred that
the right radiator does not overlap with the battery in front view of the straddled electric vehicle, and
the left radiator does not overlap with the battery in front view of the straddled electric vehicle.

Therefore, interference between the right radiator and the battery is reliably prevented. Similarly, interference between the left radiator and the battery is also reliably prevented.

In the straddled electric vehicle described above, it is preferred that
the entirety of the right radiator is disposed more rightward than an entirety of the battery, and
the entirety of the left radiator is disposed more leftward than the entirety of the battery.

Therefore, the right radiator does not suitably overlap the battery in front view of the straddled electric vehicle.

Similarly, the left radiator does not suitably overlap the battery in front view of the straddled electric vehicle.

In the straddled electric vehicle described above, it is preferred that
the entirety of the right radiator is disposed more forward than the entirety of the battery, and
the entirety of the left radiator is disposed more forward than the entirety of the battery.

Therefore, interference between the right radiator and the battery is reliably prevented. Similarly, interference between the left radiator and the battery is reliably prevented.

In the straddled electric vehicle described above, it is preferred that
the head pipe has a lower end,
the right radiator has an upper end,
the left radiator has an upper end,
the upper end of the right radiator is disposed higher than the lower end of the head pipe, and
the upper end of the left radiator is disposed higher than the lower end of the head pipe.

Therefore, each of the right radiator and the left radiator is disposed at a relatively high position. Thus, each of the right radiator and the left radiator is less likely damaged. For example, each of the right radiator and the left radiator is less likely hit by stone chips scattered when the straddled electric vehicle travels.

In the straddled electric vehicle described above, it is preferred that
the straddled electric vehicle comprises
   a right cover disposed rightward of the right radiator, and
   a left cover disposed leftward of the left radiator,
the right radiator is supported by the right cover, and
the left radiator is supported by the left cover.

The right cover is disposed rightward of the right radiator. Therefore, for example, when the straddled electric vehicle falls down, the right cover first receives an impact from the ground. For example, when the straddled electric vehicle falls down, the right cover receives an impact from the ground before the right radiator receives the impact from the ground. When the right cover receives an impact, the right cover easily bends. Here, the right radiator is supported by the right cover. Therefore, when the right cover bends, the position of the right radiator easily varies. When the right cover bends, for example, the position of the right radiator with respect to the reinforcing frame easily varies. Thus, even when the right cover receives an impact, the right radiator does not receive the impact properly. Even when the right cover receives an impact, the right radiator does not receive the entire impact. Even when the straddled electric vehicle falls down, it is difficult to crush the right radiator between the reinforcing frame and the ground. That is, the right radiator is less likely damaged. As described above, the right radiator is suitably protected by the right cover. Similarly, the left cover is disposed leftward of the left radiator. The left radiator is supported by the left cover. Therefore, the left radiator is suitably protected by the left cover.

In the straddled electric vehicle described above, it is preferred that
the entirety of the right radiator overlaps the right cover in the side view of the straddled electric vehicle, and
the entirety of the left radiator overlaps the left cover in the side view of the straddled electric vehicle.

Therefore, the right radiator is more suitably protected by the right cover. Similarly, the left radiator is more suitably protected by the left cover.

In the straddled electric vehicle described above, it is preferred that
the reinforcing frame includes
   a right reinforcing frame connected to the main frame and the down frame, and
   a left reinforcing frame connected to the main frame and the down frame,
the right radiator is disposed rightward of the right reinforcing frame,
the left radiator is disposed leftward of the left reinforcing frame,
the right radiator overlaps the right reinforcing frame in the side view of the straddled electric vehicle, and
the left radiator overlaps the left reinforcing frame in the side view of the straddled electric vehicle.

The reinforcing frame includes a right reinforcing frame and a left reinforcing frame. Each of the right reinforcing frame and the left reinforcing frame is connected to the main frame and the down frame. Therefore, each of the right reinforcing frame and the left reinforcing frame improves the rigidity of the main frame and the down frame. Thus, the reinforcing frame suitably improves the rigidity of the main frame and the down frame.

The right radiator is disposed rightward of the right reinforcing frame. The left radiator is disposed leftward of the left reinforcing frame. Here, the right radiator overlaps the right reinforcing frame in side view of the straddled electric vehicle. Therefore, interference between the right radiator and other components of the straddled electric vehicle is appropriately prevented. Similarly, the left radiator overlaps the left reinforcing frame in side view of the straddled electric vehicle. Therefore, interference between the left radiator and other components of the straddled electric vehicle is also appropriately prevented. Thus, the right radiator and the left radiator are each installed at appropriate positions.

In the straddled electric vehicle described above, it is preferred that
the right reinforcing frame has a front end,
the left reinforcing frame has a front end,
the entirety of the right radiator is disposed more rearward than the front end of the right reinforcing frame, and
the entirety of the left radiator is disposed more rearward than the front end of the left reinforcing frame.

Therefore, interference between the right radiator and other components of the straddled electric vehicle is more appropriately prevented. Similarly, interference between the left radiator and other components of the straddled electric vehicle is more appropriately prevented. Thus, the right radiator and the left radiator are each installed at more appropriate positions.

In the straddled electric vehicle described above, it is preferred that
the main frame includes
   a right main frame, and
   a left main frame disposed leftward of the right main frame,
the right reinforcing frame is connected to the right main frame and the down frame,
the left reinforcing frame is connected to the left main frame and the down frame,
   the entirety of the right radiator is disposed more rightward than an entirety of the right main frame, and
   the entirety of the left radiator is disposed more leftward than an entirety of the left main frame.

The main frame includes a right main frame and a left main frame. The left main frame is disposed leftward of the right main frame. The right reinforcing frame is connected to the right main frame and the down frame. Therefore, the right reinforcing frame improves the rigidity of the right main frame and the down frame. The left reinforcing frame is connected to the left main frame and the down frame. Therefore, the left reinforcing frame improves the rigidity of the left main frame and the down frame. Thus, even when the main frame includes the right main frame and the left main frame, the reinforcing frame suitably improves the rigidity of the main frame and the down frame. Rather, when the main frame includes the right main frame and the left main frame, the right reinforcing frame and the left reinforcing frame are very useful. When the main frame includes the right main frame and the left main frame, the right reinforcing frame and the left reinforcing frame are very useful for improving the rigidity of the main frame.

The entirety of the right radiator is disposed more rightward than an entirety of the right main frame. Therefore, interference between the right radiator and the main frame is reliably prevented. Similarly, the entirety of the left radiator is disposed more leftward than an entirety of the left main frame. Therefore, interference between the left radiator and the main frame is reliably prevented.

In the straddled electric vehicle described above, it is preferred that
the battery is disposed leftward of the right main frame and rightward of the left main frame.

When the battery is disposed leftward of the right main frame and rightward of the left main frame, the separation distance between the right main frame and the left main frame in the transverse direction of the straddled electric vehicle is relatively large. However, even when the battery is disposed leftward of the right main frame and rightward of the left main frame, the main frame has appropriate rigidity. This is because the right reinforcing frame is connected to the right main frame and the down frame, and the left reinforcing frame is connected to the left main frame and the down frame. Rather, when the battery is disposed leftward of the right main frame and rightward of the left main frame, the right reinforcing frame and the left reinforcing frame are very useful. When the battery is disposed leftward of the right main frame and rightward of the left main frame, the right reinforcing frame and the left reinforcing frame are very useful for improving the rigidity of the main frame.

In the straddled electric vehicle described above, it is preferred that
the battery is movable upward with respect to the right main frame and the left main frame.

When the battery is movable upward with respect to the right main frame and the left main frame, the separation distance between the right main frame and the left main frame in the transverse direction of the straddled electric vehicle is even larger. However, even when the battery is movable upward with respect to the right main frame and the left main frame, the main frame has appropriate rigidity. This is because the right reinforcing frame is connected to the right main frame and the down frame, and the left reinforcing frame is connected to the left main frame and the down frame. Rather, when the battery is movable upward with respect to the right main frame and the left main frame, the right reinforcing frame and the left reinforcing frame are very useful. When the battery is movable upward with respect to the right main frame and the left main frame, the right reinforcing frame and the left reinforcing frame are very useful for improving the rigidity of the main frame.

In the straddled electric vehicle described above, it is preferred that
the straddled electric vehicle comprises
   a power unit disposed below the battery,
   the right radiator is disposed higher than and more forward than the power unit, and
the left radiator is disposed higher than and more forward than the power unit.

Therefore, interference between the right radiator and the power unit is appropriately prevented. Similarly, interference between the left radiator and the power unit is appropriately prevented. Thus, the right radiator and the left radiator are each installed at appropriate positions.

In the straddled electric vehicle described above, it is preferred that
the right radiator and the left radiator each cool the power unit.

Therefore, the power unit is appropriately cooled.

In the straddled electric vehicle described above, it is preferred that
the straddled electric vehicle includes
a front fork supported by the head pipe, and
a front wheel supported by the front fork.

As described above, the right radiator and the left radiator each overlap the reinforcing frame in side view of the straddled electric vehicle. Therefore, interference between the right radiator and the front fork is appropriately prevented. Interference between the left radiator and the front fork is also appropriately prevented. Thus, the right radiator and the left radiator are each installed at appropriate positions. Advantageous Effects of Invention

The present straddled electric vehicle includes the right radiator and the left radiator installed at appropriate positions.

### Brief Description of Drawings

FIG. 1 is a left side view of a straddled electric vehicle according to an embodiment.
FIG. 2 is a perspective view of a vehicle body frame.
FIG. 3 is a left side view of the vehicle body frame, a battery, a power unit, and a radiator.
FIG. 4 is a right side view of the vehicle body frame, the battery, the power unit, and the radiator.
FIG. 5 is a plan view of the vehicle body frame, the battery, the power unit, and the radiator.
FIG. 6 is a front view of the vehicle body frame, the battery, the power unit, the radiator, and a side cover.
FIG. 7 is a left side view of the vehicle body frame, the battery, the power unit, a left radiator, and a left cover.
FIG. 8 is a right side view of the vehicle body frame, the battery, the power unit, a right radiator, and a right cover.
FIG. 9 is a plan view of the vehicle body frame, the battery, the power unit, the radiator, and the side cover.
FIG. 10 is a front view for explaining a procedure of attaching and detaching the battery to and from the vehicle body frame.

### Description of Embodiments

Hereinafter, a straddled electric vehicle 1 according to the present invention will be described with reference to the drawings.

### <1. Schematic configuration of straddled electric vehicle 1>

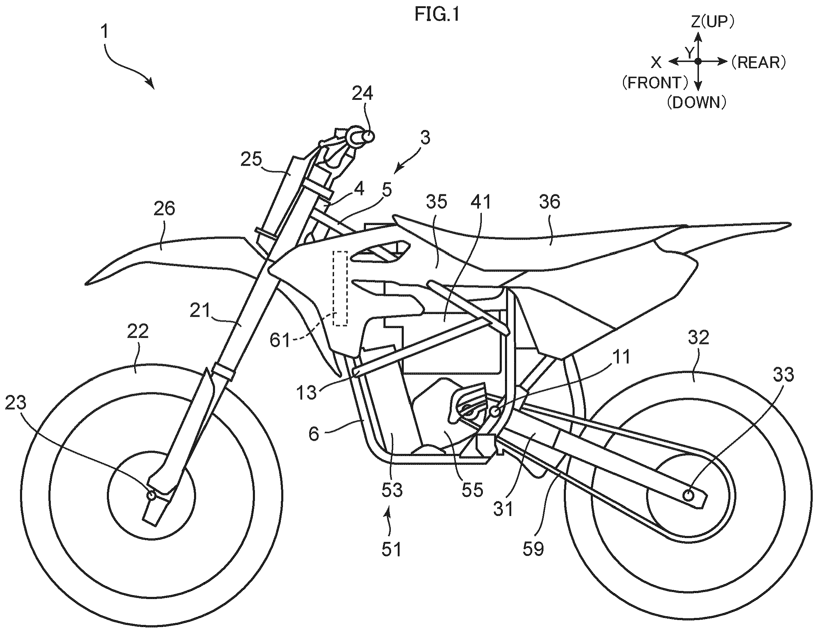

FIG. 1 is a left side view of a straddled electric vehicle 1 according to an embodiment. FIG. 1 illustrates a longitudinal direction X, a transverse direction Y, and an up-down direction Z of the straddled electric vehicle 1. The longitudinal direction X, the transverse direction Y, and the up-down direction Z are defined with reference to a driver (also referred to as a rider) mounted on the straddled electric vehicle 1. The longitudinal direction X, the transverse direction Y, and the up-down direction Z are orthogonal to each other. The longitudinal direction X and the transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled electric vehicle 1. Unless otherwise stated in this specification, "forward" and "rearward" include not only directions parallel to the longitudinal direction X but also directions close to the longitudinal direction X. The directions close to the longitudinal direction X are, for example, directions at angles of 45 degrees or less to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

In the present specification, each expression describing the arrangement has the following meaning. Hereinafter, the transverse direction Y will be described as an example, but the same applies to the longitudinal direction X and the up-down direction Z.

The expression "Member Ma is disposed more rightward/leftward than member Mb" defines a position of member Ma with respect to member Mb in the transverse direction Y, and does not define a position of member Ma with respect to member Mb in the longitudinal direction X and the up-down direction Z. In this expression, member Ma may or may not overlap member Mb in side view of the straddled electric vehicle 1.

The expression "Member Ma is disposed rightward/leftward of the member Mb" without reference to a looking direction defines a position of member Ma with respect to member Mb in the transverse direction Y, a position of member Ma with respect to member Mb in the longitudinal direction X, and a position of member Ma with respect to member Mb in the up-down direction Z. This expression means that member Ma is disposed more rightward/leftward than member Mb, and at least a part of member Ma overlaps at least a part of member Mb in side view of the straddled electric vehicle 1.

The expression "Member Ma is disposed rightward/leftward of member Mb in plan view of the straddled electric vehicle 1" defines a position of member Ma with respect to member Mb in the transverse direction Y and a position of member Ma with respect to member Mb in the longitudinal direction X, and does not define a position of member Ma with respect to member Mb in the up-down direction Z. This expression means that member Ma is disposed more rightward/leftward than member Mb, the front end of member Ma is located more forward than the rear end of member Mb, and the rear end of member Ma is located more rearward than the front end of member Mb.

The expression "Member Ma is disposed rightward/leftward of member Mb in front view of the straddled electric vehicle 1" defines a position of member Ma with respect to member Mb in the transverse direction Y and a position of member Ma with respect to member Mb in the up-down direction Z, and does not define a position of member Ma with respect to member Mb in the longitudinal direction X. This expression means that member Ma is disposed more rightward/leftward than member Mb, the upper end of member Ma is located higher than the lower end of member Mb, and the lower end of member Ma is located lower than the upper end of member Mb.

In the present specification, "in side view of the straddled electric vehicle 1" is appropriately referred to as "in vehicle side view". Similarly, "in plan view of the straddled electric vehicle 1" is appropriately referred to as "in vehicle plan view". "In bottom view of the straddled electric vehicle 1" is appropriately referred to as "in vehicle bottom view". "In front view of the straddled electric vehicle 1" is appropriately referred to as "in vehicle front view". "In rear view of the straddled electric vehicle 1" is appropriately referred to as "in vehicle rear view".

The straddled electric vehicle 1 is classified as, for example, an off-road type vehicle. The off-road type vehicle is suitable for traveling on an uneven ground, for example. The off-road type vehicle includes, for example, a motocrosser and a dual purpose vehicle. The dual purpose vehicle is also referred to as a dual-sport motorcycle.

The straddled electric vehicle 1 includes a vehicle body frame 3, a front fork 21, and a front wheel 22. The front fork 21 is supported by the vehicle body frame 3. The front fork 21 is rotatable with respect to the vehicle body frame 3. The front fork 21 extends forward and downward from the vehicle body frame 3. The front wheel 22 is supported by the front fork 21. The front wheel 22 is supported by a lower part of the front fork 21. The front wheel 22 is disposed in front of the vehicle body frame 3.

The straddled electric vehicle 1 includes a front axle 23. The front axle 23 is supported by the lower part of the front fork 21. The front axle 23 extends in the transverse direction Y. The front wheel 22 is supported by the front axle 23. The front wheel 22 is rotatable about the front axle 23.

The straddled electric vehicle 1 includes a handlebar 24, a number plate 25, and a front fender 26. The handlebar 24, the number plate 25, and the front fender 26 are each supported by the front fork 21. The handlebar 24 is supported by an upper part of the front fork 21. The number plate 25 is disposed lower than the handlebar 24. The number plate 25 is disposed in front of the front fork 21. The front fender 26 is disposed below the number plate 25. The front fender 26 is disposed above the front wheel 22. The front fender 26 extends in the longitudinal direction X. The front fender 26 extends from a position in front of the front fork 21 to a position behind the front fork 21.

The straddled electric vehicle 1 includes a swing arm 31 and a rear wheel 32. The swing arm 31 is supported by the vehicle body frame 3. The swing arm 31 is swingable with respect to the vehicle body frame 3. The swing arm 31 extends rearward from the vehicle body frame 3. The rear wheel 32 is supported by the swing arm 31. The rear wheel 32 is supported by a rear part of the swing arm 31. The rear wheel 32 is disposed behind the vehicle body frame 3.

The straddled electric vehicle 1 includes a rear axle 33. The rear axle 33 is supported by the rear part of the swing arm 31. The rear axle 33 extends in the transverse direction Y. The rear wheel 32 is supported by the rear axle 33. The rear wheel 32 is rotatable about the rear axle 33.

The straddled electric vehicle 1 includes a side cover 35 and a seat 36. The side cover 35 and the seat 36 are supported by the vehicle body frame 3. The side cover 35 is disposed on the sides of the vehicle body frame 3. The side cover 35 is disposed rightward of the vehicle body frame 3. The side cover 35 is disposed leftward of the vehicle body frame 3. The side cover 35 overlaps a part of the vehicle body frame 3 in vehicle side view. The seat 36 is disposed behind the side cover 35. The seat 36 is disposed more rearward than the handlebar 24.

The straddled electric vehicle 1 includes a battery 41 and a power unit 51. The battery 41 and the power unit 51 are each disposed behind the front wheel 22. The battery 41 and the power unit 51 are each disposed in front of the rear wheel 32. The battery 41 does not overlap the rear wheel 32 in vehicle side view. The power unit 51 does not overlap the rear wheel 32 in vehicle side view.

The power unit 51 is disposed below the battery 41. In other words, the battery 41 is disposed above the power unit 51. The power unit 51 does not substantially overlap the battery 41 in vehicle side view.

The battery 41 and the power unit 51 are supported by the vehicle body frame 3. When the battery 41 and the power unit 51 are supported by the vehicle body frame 3, the battery 41 and the power unit 51 are each fixed to the vehicle body frame 3. For example, when the battery 41 is supported by the vehicle body frame 3, the battery 41 cannot swing with respect to the vehicle body frame 3. For example, when the power unit 51 is supported by the vehicle body frame 3, the power unit 51 cannot swing with respect to the vehicle body frame 3.

The battery 41 stores electric energy. The battery 41 supplies electric energy to the power unit 51. The battery 41 is, for example, a rechargeable secondary battery. The battery 41 is, for example, a lithium ion battery.

The power unit 51 converts the electric energy into mechanical energy for propulsion of the straddled electric vehicle 1. The power unit 51 includes an inverter 53 and an electric motor 55. The inverter 53 is electrically connected to the battery 41 and the electric motor 55. The inverter 53 receives a direct current from the battery 41. The inverter 53 converts the direct current into an alternating current. The inverter 53 supplies the alternating current to the electric motor 55. The electric motor 55 is disposed behind the inverter 53. The electric motor 55 generates rotational power from an alternating current. The rotational power of the electric motor 55 is used to drive the rear wheel 32. That is, the electric motor 55 drives the rear wheel 32. The electric motor 55 is for propelling the straddled electric vehicle 1. The electric motor 55 is, for example, an AC motor.

For example, the battery 41 includes a battery main body and a battery case that houses the battery main body. For example, the power unit 51 includes a housing that houses the inverter 53 and the electric motor 55. The battery case and the housing are separated from each other. The battery case and the housing are not in contact with each other.

For example, the housing is divided into a first housing that houses the inverter 53 and a second housing that houses the electric motor 55. The first housing and the second housing are in contact with each other. The first housing and the second housing are connected to each other. Here, the first housing and the second housing may be separable from each other. Alternatively, the first housing and the second housing may be inseparable from each other. The first housing and the second housing may be integrated.

The straddled electric vehicle 1 further includes a power transmission mechanism 59. The power transmission mechanism 59 is connected to the power unit 51. Specifically, the power transmission mechanism 59 is connected to the electric motor 55. The power transmission mechanism 59 is further connected to the rear wheel 32. The power transmission mechanism 59 transmits the power of the power unit 51 to the rear wheel 32. The power transmission mechanism 59 includes, for example, a chain. Alternatively, the power transmission mechanism 59 may include, for example, either a belt or a drive shaft.

The straddled electric vehicle 1 includes a radiator 61. The radiator 61 overlaps the side cover 35 in vehicle side view. The entirety of the radiator 61 overlaps the side cover 35 in vehicle side view.

The radiator 61 is disposed more rearward than the front fork 21. The entirety of the radiator 61 is disposed more rearward than the front fork 21. The radiator 61 is disposed higher than the front wheel 22. The radiator 61 is disposed lower than the handlebar 24. The radiator 61 is disposed more rearward than the number plate 25. The radiator 61 is disposed more forward than the seat 36.

The radiator 61 cools the power unit 51. Specifically, cooling water circulates between the radiator 61 and the power unit 51. When the cooling water flows through the radiator 61, the radiator 61 cools the cooling water. When the cooling water flows through the power unit 51, the power unit 51 is cooled by the cooling water.

The driver of the straddled electric vehicle 1 sits on the seat 36 and grips the handlebar 24.

### <2. Configuration of vehicle body frame 3>

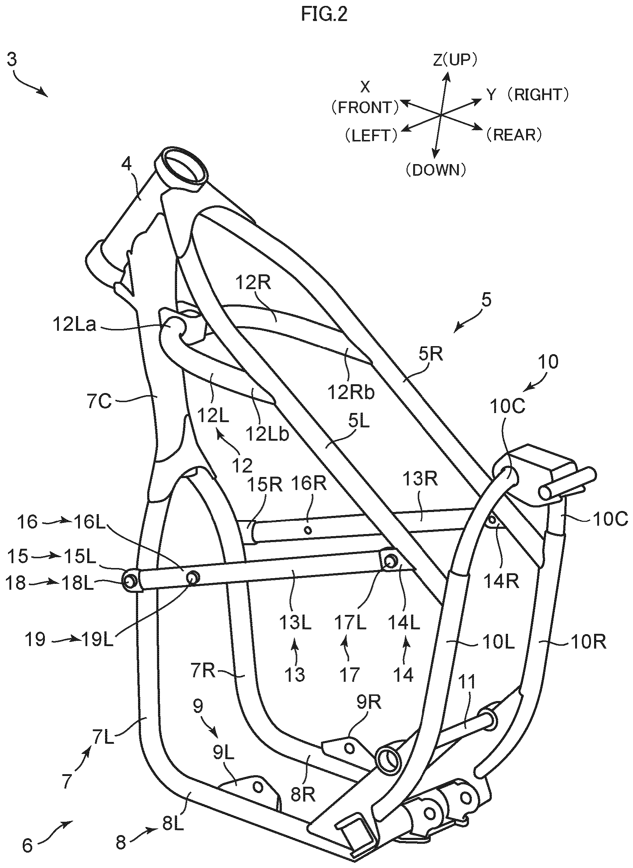

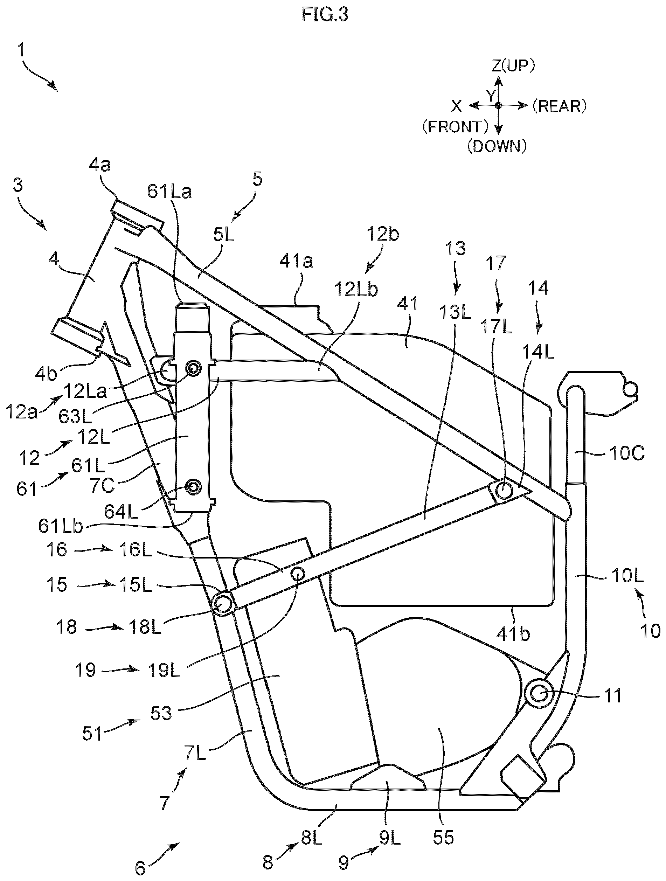

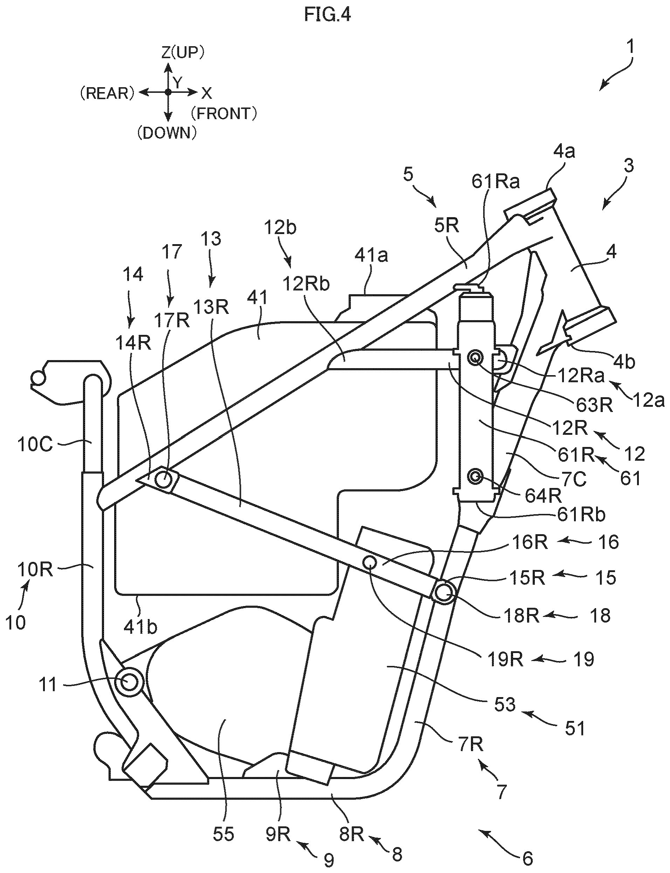

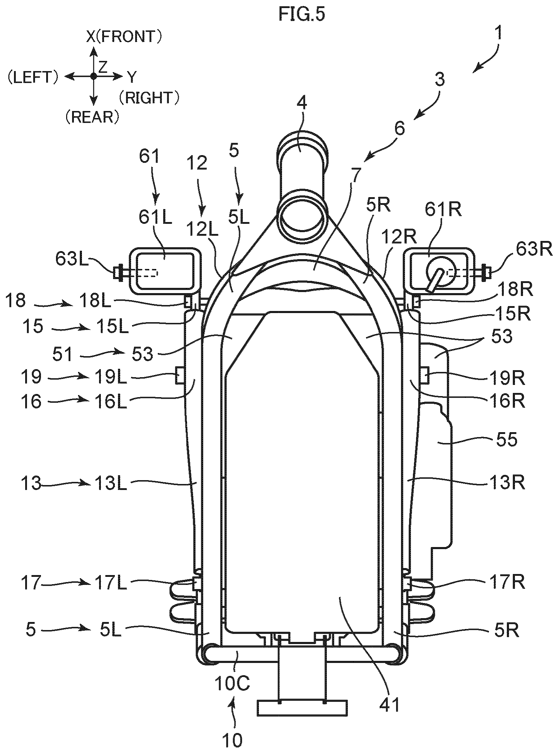

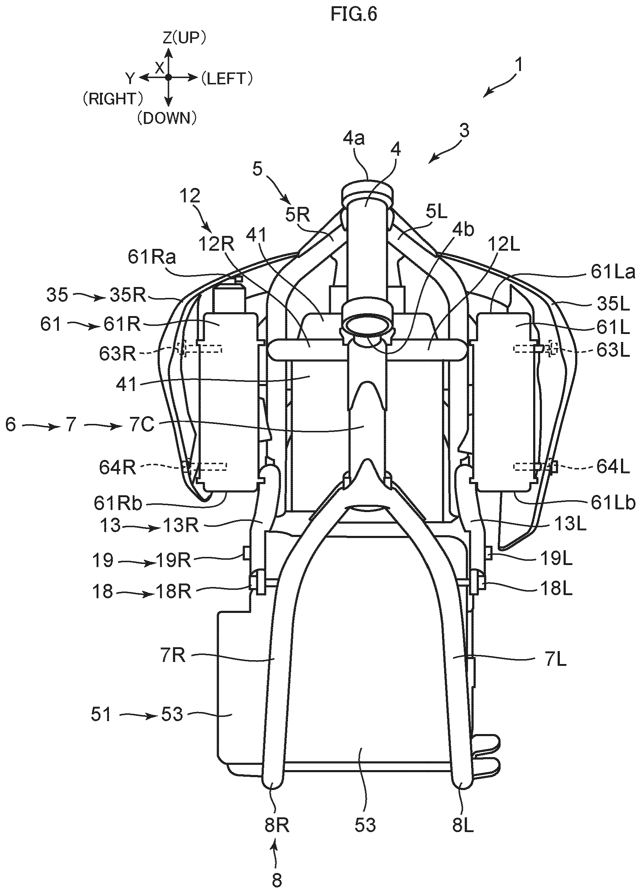

FIG. 2 is a perspective view of the vehicle body frame 3. FIG. 3 is a left side view of the vehicle body frame 3, the battery 41, the power unit 51, and the radiator 61. FIG. 4 is a right side view of the vehicle body frame 3, the battery 41, the power unit 51, and the radiator 61. FIG. 5 is a plan view of the vehicle body frame 3, the battery 41, the power unit 51, and the radiator 61. FIG. 6 is a front view of the vehicle body frame 3, the battery 41, the power unit 51, the radiator 61, and the side cover 35.

The vehicle body frame 3 includes a head pipe 4. The head pipe 4 is located at a front part of the vehicle body frame 3. The head pipe 4 extends forward and downward. The head pipe 4 supports the front fork 21. The front fork 21 rotates around the head pipe 4. The head pipe 4 is disposed behind the number plate 25.

The vehicle body frame 3 includes a main frame 5. The main frame 5 extends in the longitudinal direction X. The main frame 5 has a front end and a rear end. The front end of the main frame 5 is connected to the head pipe 4. The main frame 5 extends rearward from the head pipe 4. The main frame 5 extends downward and rearward from the head pipe 4.

The main frame 5 includes a right main frame 5R and a left main frame 5L. The left main frame 5L is disposed leftward of the right main frame 5R. Each of the right main frame 5R and the left main frame 5L is connected to the head pipe 4. The right main frame 5R extends rightward and rearward from the head pipe 4. The left main frame 5L extends leftward and rearward from the head pipe 4.

The vehicle body frame 3 includes a down frame 6. The down frame 6 is disposed below the main frame 5 in vehicle side view. The down frame 6 extends in the longitudinal direction X. The down frame 6 has a front end and a rear end. The front end of the down frame 6 is connected to the head pipe 4. The down frame 6 extends downward from the head pipe 4. Then, the down frame 6 extends rearward. The down frame 6 is disposed behind the front fork 21 in vehicle side view.

The down frame 6 includes a front portion 7 and a lower portion 8. The front portion 7 is connected to the head pipe 4. The front portion 7 extends downward from the head pipe 4. The lower portion 8 is disposed below the front portion 7. The lower portion 8 is connected to the front portion 7. The lower portion 8 is connected to the lower part of the front portion 7. The lower portion 8 extends rearward from the front portion 7.

Refer to FIGS. 2 and 6. The front portion 7 includes a central front portion 7C, a right front portion 7R, and a left front portion 7L. The central front portion 7C is connected to the head pipe 4. The central front portion 7C extends downward from the head pipe 4. The right front portion 7R and the left front portion 7L are each disposed below the central front portion 7C. The left front portion 7L is disposed leftward of the right front portion 7R. Each of the right front portion 7R and the left front portion 7L is connected to the central front portion 7C. The right front portion 7R extends rightward and downward from the central front portion 7C. The left front portion 7L extends leftward and downward from the central front portion 7C.

Refer to FIGS. 2 to 4 and 6. The lower portion 8 includes a right lower portion 8R and a left lower portion 8L. The right lower portion 8R is connected to the right front portion 7R. The right lower portion 8R extends rearward from the right front portion 7R. The left lower portion 8L is disposed leftward of the right lower portion 8R. The left lower portion 8L is connected to the left front portion 7L. The left lower portion 8L extends rearward from the left front portion 7L.

Refer to FIGS. 2 to 4. The vehicle body frame 3 includes a bracket 9. The bracket 9 is attached to the down frame 6. The bracket 9 is attached to the lower portion 8. The bracket 9 is disposed more rearward than the front portion 7.

The bracket 9 includes a right bracket 9R and a left bracket 9L. The right bracket 9R is attached to the right lower portion 8R. The left bracket 9L is disposed leftward of the right bracket 9R. The left bracket 9L is attached to the left lower portion 8L.

The vehicle body frame 3 includes a pivot frame 10. The pivot frame 10 is connected to the main frame 5 and the down frame 6. The pivot frame 10 is connected to the rear end of the main frame 5 and the rear end of the down frame 6. The pivot frame 10 extends in the up-down direction Z in vehicle side view.

The pivot frame 10 includes a right pivot frame 10R, a left pivot frame 10L, and a central pivot frame 10C. The right pivot frame 10R is connected to the right main frame 5R and the right lower portion 8R. The left pivot frame 10L is disposed leftward of the right pivot frame 10R. The left pivot frame 10L is connected to the left main frame 5L and the left lower portion 8L. Each of the right pivot frame 10R and the left pivot frame 10L extends in the up-down direction Z. The central pivot frame 10C is connected to the right pivot frame 10R and the left pivot frame 10L. The central pivot frame 10C is connected to the upper part of the right pivot frame 10R and the upper part of the left pivot frame 10L. The central pivot frame 10C extends in the transverse direction Y.

The vehicle body frame 3 includes a pivot shaft portion 11. The pivot shaft portion 11 is connected to the pivot frame 10. The pivot shaft portion 11 is connected to a right pivot frame 10R and a left pivot frame 10L. The pivot shaft portion 11 extends in the transverse direction Y.

The pivot shaft portion 11 is disposed lower than the main frame 5. The pivot shaft portion 11 is disposed lower than the central pivot frame 10C. The pivot shaft portion 11 is disposed higher than the lower portion 8. The pivot shaft portion 11 is disposed more rearward than the bracket 9. The pivot shaft portion 11 is disposed higher than the bracket 9.

The pivot shaft portion 11 supports the swing arm 31. The swing arm 31 swings around the pivot shaft portion 11.

The vehicle body frame 3 includes a reinforcing frame 12. The reinforcing frame 12 is disposed more rearward than the head pipe 4. The reinforcing frame 12 is disposed higher than the bracket 9. The reinforcing frame 12 is disposed more forward than the pivot frame 10. The reinforcing frame 12 is disposed higher than the pivot shaft portion 11. The reinforcing frame 12 is connected to the main frame 5 and the down frame 6. The reinforcing frame 12 extends rearward from the down frame 6. The reinforcing frame 12 does not have a portion located in front of the down frame 6 in vehicle side view. The reinforcing frame 12 reinforces the main frame 5 and the down frame 6. The reinforcing frame 12 is, for example, a tension pipe.

Refer to FIGS. 2 to 4 and 6. The reinforcing frame 12 includes a right reinforcing frame 12R and a left reinforcing frame 12L. The left reinforcing frame 12L is disposed leftward of the right reinforcing frame 12R. Each of the right reinforcing frame 12R and the left reinforcing frame 12L is connected to the main frame 5 and the down frame 6. Each of the right reinforcing frame 12R and the left reinforcing frame 12L extends rearward from the down frame 6 in vehicle side view. The right reinforcing frame 12R does not have a portion located in front of the down frame 6 in vehicle side view. The left reinforcing frame 12L does not have a portion located in front of the down frame 6 in vehicle side view.

Specifically, the right reinforcing frame 12R is connected to the right main frame 5R and the down frame 6. The right reinforcing frame 12R extends rightward and rearward from the down frame 6. The left reinforcing frame 12L is connected to the left main frame 5L and the down frame 6. The left reinforcing frame 12L extends leftward and rearward from the down frame 6.

Each of the right reinforcing frame 12R and the left reinforcing frame 12L extends in a horizontal direction in vehicle side view. Each of the right reinforcing frame 12R and the left reinforcing frame 12L extends in a horizontal direction in vehicle front view. Each of the right reinforcing frame 12R and the left reinforcing frame 12L is curved. For example, each of the right reinforcing frame 12R and the left reinforcing frame 12L is curved in vehicle plan view. Each of the right reinforcing frame 12R and the left reinforcing frame 12L has a rod shape or a pipe shape.

The right reinforcing frame 12R has a front end 12Ra and a rear end 12Rb. The left reinforcing frame 12L has a front end 12La and a rear end 12Lb. Each of the front ends 12Ra and 12La is connected to the down frame 6. Each of the front ends 12Ra and 12La is connected to the front portion 7. Each of the front ends 12Ra and 12La is connected to the central front portion 7C. Each of the rear ends 12Rb and 12Lb is connected to the main frame 5. The rear end 12Rb is connected to the right main frame 5R. The rear end 12Lb is connected to the left main frame 5L.

The rear end 12Rb is located more rearward than and more rightward than the front end 12Ra. The rear end 12Rb is disposed at substantially the same height position as the front end 12Ra. The rear end 12Lb is located more rearward than and more leftward than the front end 12La. The rear end 12Lb is disposed at substantially the same height position as the front end 12La.

When the front ends 12Ra and 12La are not distinguished, they are referred to as "front end 12a". When the rear ends 12Rb and 12Lb are not distinguished, they are referred to as "rear end 12b".

Refer to FIGS. 2 to 6. The vehicle body frame 3 includes a connecting member 13. The connecting member 13 is disposed more rearward than the head pipe 4. The connecting member 13 is disposed higher than the bracket 9. The connecting member 13 is disposed more forward than the pivot frame 10. The connecting member 13 is disposed higher than the pivot shaft portion 11. The connecting member 13 is disposed lower than the reinforcing frame 12. The connecting member 13 is connected to the main frame 5 and the down frame 6. The connecting member 13 extends rearward from the down frame 6. The connecting member 13 reinforces the main frame 5 and the down frame 6. The connecting member 13 is, for example, a tension pipe.

The connecting member 13 includes a right connecting member 13R and a left connecting member 13L. The left connecting member 13L is disposed leftward of the right connecting member 13R. Each of the right connecting member 13R and the left connecting member 13L is connected to the main frame 5 and the down frame 6. Each of the right connecting member 13R and the left connecting member 13L extends rearward from the down frame 6. Each of the right connecting member 13R and the left connecting member 13L extends rearward and upward from the down frame 6.

Specifically, the right connecting member 13R is connected to the right main frame 5R and the down frame 6. The left connecting member 13L is connected to the left main frame 5L and the down frame 6.

Each of the right connecting member 13R and the left connecting member 13L extends linearly in vehicle side view. Strictly speaking, each of the right connecting member 13R and the left connecting member 13L is curved. For example, each of the right connecting member 13R and the left connecting member 13L is slightly curved in vehicle plan view. Each of the right connecting member 13R and the left connecting member 13L is slightly curved in vehicle front view. Each of the right connecting member 13R and the left connecting member 13L has a rod shape or a pipe shape.

The right connecting member 13R has a first site 14R and a second site 15R. The left connecting member 13L has a first site 14L and a second site 15L. Each of the first sites 14R and 14L is connected to the main frame 5. The first site 14R is connected to the right main frame 5R. The first site 14L is connected to the left main frame 5L. Each of the second sites 15R and 15L is connected to the down frame 6. Each of the second sites 15R and 15L is connected to the front portion 7. The second site 15R is connected to the right front portion 7R. The second site 15L is connected to the left front portion 7L. The right connecting member 13R extends from the first site 14R to the second site 15R. The left connecting member 13L extends from the first site 14L to the second site 15L.

The second site 15R is disposed more forward than and lower than the first site 14R. The second site 15L is disposed more forward than and lower than the first site 14L.

The first site 14R is, for example, a rear end of the right connecting member 13R. The second site 15R is, for example, a front end of the right connecting member 13R. The first site 14L is, for example, a rear end of the left connecting member 13L. The second site 15L is, for example, a front end of the left connecting member 13L.

When the first sites 14R and 14L are not distinguished, they are referred to as "first site 14". When the second sites 15R and 15L are not distinguished, they are referred to as "second site 15".

The first site 14 is disposed lower than the front end 12a and the rear end 12b of the reinforcing frame 12. The first site 14 is disposed more rearward than the rear end 12b. The second site 15 is disposed lower than the front end 12a and the rear end 12b. The second site 15 is disposed more rearward than the front end 12a. The second site 15 is disposed more forward than the rear end 12b.

The first site 14 is disposed higher than and more rearward than the bracket 9. The second site 15 is disposed higher than and more forward than the bracket 9.

Each element of the vehicle body frame 3 is made of metal. For example, the down frame 6 is made of metal. The down frame 6 is not made of resin. The down frame 6 has relatively high rigidity. For example, the reinforcing frame 12 is made of metal. The reinforcing frame 12 is not made of resin. The reinforcing frame 12 has relatively high rigidity.

The head pipe 4 and the main frame 5 are connected by welding, for example. Therefore, the head pipe 4 and the main frame 5 are inseparable from each other. Similarly, the head pipe 4 and the down frame 6 are connected by welding, for example. Therefore, the head pipe 4 and the down frame 6 are also inseparable from each other. Thus, the main frame 5 and the down frame 6 are inseparable from each other.

The main frame 5, the down frame 6, and the pivot frame 10 are inseparable from one another.

The main frame 5, the down frame 6, and the reinforcing frame 12 are inseparable from one another.

The pivot shaft portion 11 is detachable from the pivot frame 10, for example.

The connecting member 13 is detachable from the main frame 5 and the down frame 6. The right connecting member 13R is detachable from the main frame 5 and the down frame 6. The left connecting member 13L is detachable from the main frame 5 and the down frame 6.

The straddled electric vehicle 1 includes fastening members 17 and 18. The fastening member 17 fastens the first site 14 and the main frame 5. The fastening member 17 includes a right fastening member 17R and a left fastening member 17L. The right fastening member 17R fastens the first site 14R and the right main frame 5R. The left fastening member 17L fastens the first site 14L and the left main frame 5L. The fastening member 18 fastens the second site 15 and the down frame 6. The fastening member 18 includes a right fastening member 18R and a left fastening member 17L. The right fastening member 18R fastens the second site 15R and the right front portion 7R. The left fastening member 18L fastens the second site 15L and the left front portion 7L.

The fastening members 17 and 18, the right fastening members 17R and 18R, and the left fastening members 17L and 18L each are, for example, bolts.

### <3. Arrangement of vehicle body frame 3 and battery 41>

Refer to FIGS. 3 to 6. The head pipe 4 is disposed more forward than the battery 41. The head pipe 4 does not overlap the battery 41 in vehicle side view. The head pipe 4 does not overlap the battery 41 in vehicle plan view. The head pipe 4 overlaps the battery 41 in vehicle front view.

The head pipe 4 is disposed at the same height position as a part of the battery 41. The head pipe 4 has an upper end 4a and a lower end 4b. The battery 41 has an upper end 41a and a lower end 41b. The upper end 4a of the head pipe 4 is disposed higher than the upper end 41a of the battery 41. The lower end 4b of the head pipe 4 is disposed lower than the upper end 41a of the battery 41. The lower end 4b of the head pipe 4 is disposed higher than the lower end 41b of the battery 41.

The main frame 5 overlaps the battery 41 in vehicle side view. The right main frame 5R overlaps the battery 41 in vehicle side view. The left main frame 5L overlaps the battery 41 in vehicle side view. In other words, the battery 41 overlaps the main frame 5 in vehicle side view. At least a part of the battery 41 overlaps the main frame 5 in vehicle side view. The battery 41 overlaps the right main frame 5R in vehicle side view. At least a part of the battery 41 overlaps the right main frame 5R in vehicle side view. The battery 41 overlaps the left main frame 5L in vehicle side view. At least a part of the battery 41 overlaps the left main frame 5L in vehicle side view.

The main frame 5 extends from a position more forward than the battery 41 to a position more rearward than the battery 41. The right main frame 5R extends from a position more forward than the battery 41 to a position more rearward than the battery 41. The left main frame 5L extends from a position more forward than the battery 41 to a position more rearward than the battery 41.

The battery 41 includes a portion located above the main frame 5 in vehicle side view, and a portion located below the main frame 5 in vehicle side view.

The main frame 5 does not overlap the battery 41 in vehicle plan view. The main frame 5 allows the battery 41 to move in the up-down direction Z with respect to the main frame 5.

The battery 41 is disposed between the right main frame 5R and the left main frame 5L. The right main frame 5R is disposed rightward of the battery 41. The right main frame 5R does not overlap the battery 41 in vehicle plan view. The left main frame 5L is disposed leftward of the battery 41. The left main frame 5L does not overlap the battery 41 in vehicle plan view. The battery 41 is movable upward with respect to the right main frame 5R and the left main frame 5L. The right main frame 5R and the left main frame 5L allow the battery 41 to move in the up-down direction Z with respect to the right main frame 5R and the left main frame 5L. Therefore, the separation distance between the right main frame 5R and the left main frame 5L in the transverse direction Y is sufficiently large.

The down frame 6 is disposed in front of the battery 41. The down frame 6 overlaps the battery 41 in vehicle front view. Specifically, the front portion 7 is disposed in front of the battery 41. The front portion 7 overlaps the battery 41 in vehicle front view.

The down frame 6 is disposed below the battery 41. Specifically, the lower portion 8 is disposed below the battery 41.

The down frame 6 does not overlap the battery 41 in vehicle side view. Specifically, the front portion 7 does not overlap the battery 41 in vehicle side view. The lower portion 8 does not overlap the battery 41 in vehicle side view.

The pivot frame 10 is disposed more rearward than the battery 41. The pivot frame 10 does not overlap the battery 41 in vehicle side view.

The pivot shaft portion 11 is disposed more rearward than the battery 41. The pivot shaft portion 11 is disposed lower than the battery 41. The pivot shaft portion 11 does not overlap the battery 41 in vehicle side view.

The reinforcing frame 12 overlaps the battery 41 in vehicle side view. The right reinforcing frame 12R overlaps the battery 41 in vehicle side view. The left reinforcing frame 12L overlaps the battery 41 in vehicle side view.

The rear end 12b of the reinforcing frame 12 overlaps the battery 41 in vehicle side view. The rear end 12Rb of the right reinforcing frame 12R overlaps the battery 41 in vehicle side view. The rear end 12Lb of the left reinforcing frame 12L overlaps the battery 41 in vehicle side view.

The front end 12a of the reinforcing frame 12 is disposed more forward than the battery 41. The front end 12a of the reinforcing frame 12 does not overlap the battery 41 in vehicle side view. The front end 12Ra of the right reinforcing frame 12R is disposed more forward than the battery 41. The front end 12Ra of the right reinforcing frame 12R does not overlap the battery 41 in vehicle side view. The front end 12La of the left reinforcing frame 12L is disposed more forward than the battery 41. The front end 12La of the left reinforcing frame 12L does not overlap the battery 41 in vehicle side view.

The reinforcing frame 12 overlaps the battery 41 in vehicle front view. The front end 12a of the reinforcing frame 12 overlaps the battery 41 in vehicle front view.

The reinforcing frame 12 does not overlap the battery 41 in vehicle plan view. The reinforcing frame 12 allows the battery 41 to move in the up-down direction Z with respect to the reinforcing frame 12.

The battery 41 is disposed between the right reinforcing frame 12R and the left reinforcing frame 12L. The right reinforcing frame 12R is disposed rightward of the battery 41. The rear end 12Rb of the right reinforcing frame 12R is disposed rightward of the battery 41. The right reinforcing frame 12R does not overlap the battery 41 in vehicle plan view. The left reinforcing frame 12L is disposed leftward of the battery 41. The rear end 12Lb of the left reinforcing frame 12L is disposed leftward of the battery 41. The left reinforcing frame 12L does not overlap the battery 41 in vehicle plan view. The battery 41 is movable upward with respect to the right reinforcing frame 12R and the left reinforcing frame 12L. The right reinforcing frame 12R and the left reinforcing frame 12L allow the battery 41 to move in the up-down direction Z with respect to the right reinforcing frame 12R and the left reinforcing frame 12L.

The connecting member 13 overlaps the battery 41 in vehicle side view. At least a part of the connecting member 13 overlaps the battery 41 in vehicle side view. The right connecting member 13R overlaps the battery 41 in vehicle side view. At least a part of the right connecting member 13R overlaps the battery 41 in vehicle side view. The left connecting member 13L overlaps the battery 41 in vehicle side view. At least a part of the left connecting member 13L overlaps the battery 41 in vehicle side view.

The first site 14 overlaps the battery 41 in vehicle side view. The first site 14R overlaps the battery 41 in vehicle side view. The first site 14L overlaps the battery 41 in vehicle side view.

The second site 15 is disposed more forward than the battery 41. The second site 15 does not overlap the battery 41 in vehicle side view.

The connecting member 13 does not overlap the battery 41 in vehicle front view. The right connecting member 13R is disposed more rightward than the battery 41 in vehicle front view. The left connecting member 13L is disposed more leftward than the battery 41 in vehicle front view.

The connecting member 13 does not overlap the battery 41 in vehicle plan view. The connecting member 13 allows the battery 41 to move in the up-down direction Z with respect to the connecting member 13.

The battery 41 is disposed between the right connecting member 13R and the left connecting member 13L. The right connecting member 13R is disposed rightward of the battery 41. The right connecting member 13R does not overlap the battery 41 in vehicle plan view. The left connecting member 13L is disposed leftward of the battery 41. The left connecting member 13L does not overlap the battery 41 in vehicle plan view. The battery 41 is movable upward with respect to the right connecting member 13R and the left connecting member 13L. The right connecting member 13R and the left connecting member 13L allow the battery 41 to move in the up-down direction Z with respect to the right connecting member 13R and the left connecting member 13L.

The connecting member 13 does not support the battery 41. The connecting member 13 is separated from the battery 41. The connecting member 13 is not in contact with the battery 41.

For example, the battery 41 is supported by the vehicle body frame 3 via a bracket (not illustrated).

### <4. Arrangement of vehicle body frame 3 and power unit 51>

Refer to FIGS. 3 to 6. The vehicle body frame 3 is classified as a cradle frame. The vehicle body frame 3 surrounds the power unit 51 in vehicle side view. The vehicle body frame 3 is located above, in front of, below, and behind the power unit 51. The configuration of the vehicle body frame 3 will be described.

The head pipe 4 is disposed more forward than the power unit 51. The head pipe 4 is disposed higher than the power unit 51. The head pipe 4 does not overlap the power unit 51 in vehicle side view. The head pipe 4 does not overlap the power unit 51 in vehicle plan view. The head pipe 4 does not overlap the power unit 51 in vehicle front view.

The main frame 5 is disposed above the power unit 51. The main frame 5 overlaps the power unit 51 in vehicle plan view. Specifically, the right main frame 5R is disposed above the power unit 51. The right main frame 5R overlaps the power unit 51 in vehicle plan view. The left main frame 5L is disposed above the power unit 51. The left main frame 5L overlaps the power unit 51 in vehicle plan view.

The main frame 5 does not overlap the power unit 51 in vehicle side view. The right main frame 5R does not overlap the power unit 51 in vehicle side view. The left main frame 5L does not overlap the power unit 51 in vehicle side view.

The main frame 5 passes through a position above the power unit 51 and extends from a position more forward than the power unit 51 to a position more rearward than the power unit 51. The right main frame 5R passes through a position above the power unit 51 and extends from a position more forward than the power unit 51 to a position more rearward than the power unit 51. The left main frame 5L passes through a position above the power unit 51 and extends from a position more forward than the power unit 51 to a position more rearward than the power unit 51.

The down frame 6 is disposed in front of the power unit 51. The down frame 6 overlaps the power unit 51 in vehicle front view. Specifically, the front portion 7 is disposed in front of the power unit 51. The front portion 7 overlaps the power unit 51 in vehicle front view.

The down frame 6 extends in the up-down direction Z in front of the power unit 51. The down frame 6 passes through a position in front of the power unit 51 and extends from a position higher than the power unit 51 to a position lower than the power unit 51. Specifically, the front portion 7 extends in the up-down direction Z in front of the power unit 51. The front portion 7 passes through a position in front of the power unit 51 and extends from a position higher than the power unit 51 to a position lower than the power unit 51.

The down frame 6 is disposed below the power unit 51. Although not illustrated, the down frame 6 overlaps the power unit 51 in vehicle bottom view. Specifically, the lower portion 8 is disposed below the power unit 51. The lower portion 8 overlaps the power unit 51 in vehicle bottom view.

The down frame 6 extends in the longitudinal direction X below the power unit 51. Specifically, the lower portion 8 extends in the longitudinal direction X below the power unit 51.

The down frame 6 does not substantially overlap the power unit 51 in vehicle side view. Specifically, the front portion 7 does not substantially overlap the power unit 51 in vehicle side view. The lower portion 8 does not substantially overlap the power unit 51 in vehicle side view.

In summary, the main frame 5 and the down frame 6 surround the power unit 51 in vehicle side view. The main frame 5 and the down frame 6 each extend so that the main frame 5 and the down frame 6 surround the power unit 51 in vehicle side view.

The power unit 51 is disposed below the main frame 5 and above the down frame 6. In other words, the main frame 5 is disposed above the power unit 51, and the down frame 6 is disposed below the power unit 51. Therefore, the separation distance between the main frame 5 and the down frame 6 in the up-down direction Z is sufficiently large. The separation distance between the right main frame 5R and the right lower portion 8R in the up-down direction Z is sufficiently large. The separation distance between the left main frame 5L and the left lower portion 8L in the up-down direction Z is sufficiently large.

The bracket 9 is disposed below the power unit 51. The bracket 9 supports the power unit 51. The bracket 9 supports the lower part of the power unit 51. The bracket 9 supports the electric motor 55. The down frame 6 supports the power unit 51 via the bracket 9.

The pivot frame 10 is disposed behind the power unit 51. Although not illustrated, the pivot frame 10 overlaps the power unit 51 in vehicle rear view. The pivot frame 10 does not substantially overlap the power unit 51 in vehicle side view.

The pivot shaft portion 11 is disposed behind the power unit 51. The pivot shaft portion 11 is disposed at the same height position as a part of the power unit 51. Although not illustrated, the pivot shaft portion 11 overlaps the power unit 51 in vehicle rear view.

The pivot shaft portion 11 supports the power unit 51. The pivot shaft portion 11 supports the rear part of the power unit 51. The pivot shaft portion 11 supports the electric motor 55. However, the power unit 51 cannot swing around the pivot shaft portion 11.

The reinforcing frame 12 is disposed higher than the power unit 51. The reinforcing frame 12 does not overlap the power unit 51 in vehicle side view. Specifically, the right reinforcing frame 12R is disposed higher than the power unit 51. The right reinforcing frame 12R does not overlap the power unit 51 in vehicle side view. The left reinforcing frame 12L is disposed higher than the power unit 51. The left reinforcing frame 12L does not overlap the power unit 51 in vehicle side view.

The arrangement of the connecting member 13 and the power unit 51 when the connecting member 13 is attached to the main frame 5 and the down frame 6 will be described. The connecting member 13 overlaps the power unit 51 in vehicle side view. At least a part of the connecting member 13 overlaps the power unit 51 in vehicle side view. The right connecting member 13R overlaps the power unit 51 in vehicle side view. At least a part of the right connecting member 13R overlaps the power unit 51 in vehicle side view. The left connecting member 13L overlaps the power unit 51 in vehicle side view. At least a part of the left connecting member 13L overlaps the power unit 51 in vehicle side view.

The connecting member 13 overlaps the inverter 53 in vehicle side view. At least a part of the connecting member 13 overlaps the inverter 53 in vehicle side view. The right connecting member 13R overlaps the inverter 53 in vehicle side view. At least a part of the right connecting member 13R overlaps the inverter 53 in vehicle side view. The left connecting member 13L overlaps the inverter 53 in vehicle side view. At least a part of the left connecting member 13L overlaps the inverter 53 in vehicle side view.

The connecting member 13 is disposed higher than the electric motor 55. The connecting member 13 does not overlap the electric motor 55 in vehicle side view. Specifically, the right connecting member 13R is disposed higher than the electric motor 55. The right connecting member 13R does not overlap the electric motor 55 in vehicle side view. The left connecting member 13L is disposed higher than the electric motor 55. The left connecting member 13L does not overlap the electric motor 55 in vehicle side view.

The first site 14 is disposed higher than the power unit 51. The first site 14 does not overlap the power unit 51 in vehicle side view. The second site 15 is disposed more forward than the power unit 51. The second site 15 does not overlap the power unit 51 in vehicle side view.

The power unit 51 is disposed between the right connecting member 13R and the left connecting member 13L. The inverter 53 is disposed between the right connecting member 13R and the left connecting member 13L. The right connecting member 13R is disposed rightward of the power unit 51. The right connecting member 13R is disposed rightward of the inverter 53. The left connecting member 13L is disposed leftward of the power unit 51. The left connecting member 13L is disposed leftward of the inverter 53.

When the connecting member 13 is detached from the main frame 5 and the down frame 6, the connecting member 13 does not overlap the power unit 51 in vehicle side view. Therefore, when the connecting member 13 is detached from the main frame 5 and the down frame 6, the connecting member 13 allows the power unit 51 to move in the transverse direction Y with respect to the main frame 5 and the down frame 6. For convenience, the space between the main frame 5 and the down frame 6 is referred to as an internal space. For example, when the right connecting member 13R is detached from the main frame 5 and the down frame 6, the right connecting member 13R allows the power unit 51 to move rightward from the internal space. For example, when the left connecting member 13L is detached from the main frame 5 and the down frame 6, the left connecting member 13L allows the power unit 51 to move leftward from the internal space.

The connecting member 13 is connected to the power unit 51. The connecting member 13 supports the power unit 51. The connecting member 13 supports the upper part of the power unit 51. The connecting member 13 supports the inverter 53. Each of the right connecting member 13R and the left connecting member 13L supports the power unit 51. Each of the right connecting member 13R and the left connecting member 13L supports the inverter 53.

The right connecting member 13R includes a third site 16R. The left connecting member 13L includes a third site 16L. Each of the third sites 16R and 16L is connected to the power unit 51. Each of the third sites 16R and 16L is connected to the inverter 53.

Each of the third sites 16R and 16L overlaps the power unit 51 in vehicle side view. Each of the third sites 16R and 16L overlaps the inverter 53 in vehicle side view.

The third site 16R is disposed between the first site 14R and the second site 15R. The third site 16R is disposed more forward than and lower than the first site 14R. The third site 16R is disposed more rearward than and higher than the second site 15R. The right connecting member 13R passes through the third site 16R and extends from the first site 14R to the second site 15R. The right connecting member 13R extends from the first site 14R to the second site 15R through the third site 16R. For example, the first site 14R, the third site 16R, and the second site 15R are arranged on a straight line in vehicle side view. For example, the third site 16R is located on a straight line connecting the first site 14R and the second site 15R in vehicle side view. For example, the right connecting member 13R passes through the third site 16R and linearly extends from the first site 14R to the second site 15R in vehicle side view. For example, the right connecting member 13R linearly extends from the first site 14R to the second site 15R through the third site 16R in vehicle side view. Similarly, the third site 16L is disposed between the first site 14L and the second site 15L. The third site 16L is disposed more forward than and lower than the first site 14L. The third site 16L is disposed more rearward than and higher than the second site 15L. The left connecting member 13L passes through the third site 16L and extends from the first site 14L and the second site 15L. The left connecting member 13L extends from the first site 14L to the second site 15L through the third site 16L. For example, the first site 14L, the third site 16L, and the second site 15L are arranged on a straight line in vehicle side view. For example, the third site 16L is located on a straight line connecting the first site 14L and the second site 15L in vehicle side view. For example, the left connecting member 13L passes through the third site 16L and linearly extends from the first site 14L to the second site 15L in vehicle side view. For example, the left connecting member 13L linearly extends from the first site 14L to the second site 15L through the third site 16L in vehicle side view.

When the third sites 16R and 16L are not distinguished, they are referred to as "third site 16".

The third site 16 is disposed more forward than and higher than the bracket 9. The third site 16 is disposed more forward than and higher than the pivot shaft portion 11.

The connecting member 13 is detachable from the power unit 51. The right connecting member 13R is detachable from the power unit 51. The left connecting member 13L is detachable from the power unit 51.

The straddled electric vehicle 1 includes a fastening member 19. The fastening member 19 fastens the third site 16 and the power unit 51. The fastening member 19 includes a right fastening member 19R and a left fastening member 19L. The right fastening member 19R fastens the third site 16R and the power unit 51. The left fastening member 19L fastens the third site 16L and the power unit 51.

The fastening member 19, the right fastening member 19R, and the left fastening member 19L each are, for example, bolts.

### <5. Radiator 61>

Refer to FIGS. 3 to 6. The radiator 61 includes a right radiator 61R and a left radiator 61L. The left radiator 61L is disposed leftward of the right radiator 61R. The left radiator 61L is disposed at substantially the same height position as the right radiator 61R. The left radiator 61L is separated from the right radiator 61R. The left radiator 61L is not in contact with the right radiator 61R.

The right radiator 61R extends in the up-down direction Z in vehicle side view. The right radiator 61R has a substantially rectangular shape in vehicle front view. The right radiator 61R has an elongated shape in the up-down direction Z in vehicle front view. The length of the right radiator 61R in the up-down direction Z is longer than the length of the right radiator 61R in the transverse direction Y. The left radiator 61L also has substantially the same shape as the right radiator 61R.

The right radiator 61R cools the power unit 51. The left radiator 61L cools the power unit 51. Specifically, cooling water circulates between the right radiator 61R, the left radiator 61L, and the power unit 51. For example, the cooling water flows to the right radiator 61R, the left radiator 61L, and the power unit 51 in this order, and then returns to the right radiator 61R. When the cooling water flows through the right radiator 61R, the right radiator 61R cools the cooling water. When the cooling water flows through the left radiator 61L, the left radiator 61L cools the cooling water. When the cooling water flows through the power unit 51, the power unit 51 is cooled by the cooling water.

Each of the right radiator 61R and the left radiator 61L is separated from the head pipe 4. The right radiator 61R is not in contact with the head pipe 4. The left radiator 61L is not in contact with the head pipe 4.

The right radiator 61R and the left radiator 61L are each disposed more rearward than the head pipe 4. The entirety of the right radiator 61R is disposed more rearward than the entirety of the head pipe 4. The right radiator 61R does not overlap the head pipe 4 in vehicle side view. The entirety of the left radiator 61L is disposed more rearward than the entirety of the head pipe 4. The left radiator 61L does not overlap the head pipe 4 in vehicle side view.

At least a part of the right radiator 61R is disposed at the same height position as the head pipe 4. The right radiator 61R has an upper end 61Ra and a lower end 61Rb. The upper end 61Ra is disposed lower than the upper end 4a of the head pipe 4. The upper end 61Ra is disposed higher than the lower end 4b of the head pipe 4. The lower end 61Rb is disposed lower than the lower end 4b of the head pipe 4.

Similarly, at least a part of the left radiator 61L is disposed at the same height position as the head pipe 4. The left radiator 61L has an upper end 61La and a lower end 61Lb. The upper end 61La is disposed lower than the upper end 4a of the head pipe 4. The upper end 61La is disposed higher than the lower end 4b of the head pipe 4. The lower end 61Lb is disposed lower than the lower end 4b of the head pipe 4.

The right radiator 61R is disposed more rightward than the head pipe 4. The entirety of the right radiator 61R is disposed more rightward than the entirety of the head pipe 4. The right radiator 61R does not overlap the head pipe 4 in vehicle front view. The right radiator 61R does not overlap the head pipe 4 in vehicle plan view.

The left radiator 61L is disposed more leftward than the head pipe 4. The entirety of the left radiator 61L is disposed more leftward than the entirety of the head pipe 4. The left radiator 61L does not overlap the head pipe 4 in vehicle front view. The left radiator 61L does not overlap the head pipe 4 in vehicle plan view.

Although not illustrated, the right radiator 61R is disposed more rightward than the number plate 25. The entirety of the right radiator 61R is disposed more rightward than the entirety of the number plate 25. The right radiator 61R does not overlap the number plate 25 in vehicle front view. The left radiator 61L is disposed more leftward than the number plate 25. The entirety of the left radiator 61L is disposed more leftward than the entirety of the number plate 25. The left radiator 61L does not overlap the number plate 25 in vehicle front view.

Each of the right radiator 61R and the left radiator 61L is separated from the main frame 5. The right radiator 61R is not in contact with the main frame 5. The left radiator 61L is not in contact with the main frame 5.

The right radiator 61R and the left radiator 61L are each disposed below the main frame 5 in vehicle side view. The right radiator 61R is disposed below the right main frame 5R in vehicle side view. The left radiator 61L is disposed below the left main frame 5L in vehicle side view.

The main frame 5 extends from a position more forward than the right radiator 61R and the left radiator 61L to a position more rearward than the right radiator 61R and the left radiator 61L. The right main frame 5R extends from a position more forward than the right radiator 61R to a position more rearward than the right radiator 61R. The left main frame 5L extends from a position more forward than the left radiator 61L to a position more rearward than the left radiator 61L.

The right radiator 61R is disposed more rightward than the main frame 5. The entirety of the right radiator 61R is disposed more rightward than the entirety of the main frame 5. The right radiator 61R is disposed more rightward than the right main frame 5R. The entirety of the right radiator 61R is disposed more rightward than the entirety of the right main frame 5R. The right radiator 61R does not overlap the main frame 5 in vehicle front view. The right radiator 61R does not overlap the right main frame 5R in vehicle front view. The right radiator 61R does not overlap the main frame 5 in vehicle plan view. The right radiator 61R does not overlap the right main frame 5R in vehicle plan view.

The left radiator 61L is disposed more leftward than the main frame 5. The entirety of the left radiator 61L is disposed more leftward than the entirety of the main frame 5. The left radiator 61L is disposed more leftward than the left main frame 5L. The entirety of the left radiator 61L is disposed more leftward than the entirety of the left main frame 5L. The left radiator 61L does not overlap the main frame 5 in vehicle front view. The left radiator 61L does not overlap the left main frame 5L in vehicle front view. The left radiator 61L does not overlap the main frame 5 in vehicle plan view. The left radiator 61L does not overlap the left main frame 5L in vehicle plan view.

Each of the right radiator 61R and the left radiator 61L is separated from the down frame 6. The right radiator 61R is not in contact with the down frame 6. The left radiator 61L is also not in contact with the down frame 6.

The right radiator 61R and the left radiator 61L are each disposed behind the down frame 6 in vehicle side view. The right radiator 61R does not have a portion located in front of the down frame 6 in vehicle side view. The left radiator 61L does not have a portion located in front of the down frame 6 in vehicle side view. Specifically, the right radiator 61R and the left radiator 61L are each disposed behind the front portion 7 in vehicle side view. The right radiator 61R does not have a portion located in front of the front portion 7 in vehicle side view. The left radiator 61L does not have a portion located in front of the front portion 7 in vehicle side view.

The right radiator 61R and the left radiator 61L are each disposed more rearward than the front fork 21.

The right radiator 61R is disposed more rightward than the down frame 6. The entirety of the right radiator 61R is disposed more rightward than the entirety of the down frame 6. The right radiator 61R does not overlap the down frame 6 in vehicle front view. The left radiator 61L is disposed more leftward than the down frame 6. The entirety of the left radiator 61L is disposed more leftward than the entirety of the down frame 6. The left radiator 61L does not overlap the down frame 6 in vehicle front view.

The right radiator 61R and the left radiator 61L are each disposed more forward than the pivot frame 10. The right radiator 61R does not overlap the pivot frame 10 in vehicle side view. The left radiator 61L does not overlap the pivot frame 10 in vehicle side view.

The right radiator 61R and the left radiator 61L are each disposed more forward than the pivot shaft portion 11. Each of the right radiator 61R and the left radiator 61L are each disposed higher than the pivot shaft portion 11. The right radiator 61R does not overlap the pivot shaft portion 11 in vehicle side view. The left radiator 61L does not overlap the pivot shaft portion 11 in vehicle side view.

Each of the right radiator 61R and the left radiator 61L is separated from the reinforcing frame 12. The right radiator 61R is not in contact with the reinforcing frame 12. The left radiator 61L is not in contact with the reinforcing frame 12.

Each of the right radiator 61R and the left radiator 61L overlaps the reinforcing frame 12 in vehicle side view. At least a part of the right radiator 61R overlaps the reinforcing frame 12 in vehicle side view. At least a part of the left radiator 61L overlaps the reinforcing frame 12 in vehicle side view. The right radiator 61R overlaps the right reinforcing frame 12R in vehicle side view. At least a part of the right radiator 61R overlaps the right reinforcing frame 12R in vehicle side view. The left radiator 61L overlaps the left reinforcing frame 12L in vehicle side view. At least a part of the left radiator 61L overlaps the left reinforcing frame 12L in vehicle side view.

The reinforcing frame 12 extends from a position more forward than the right radiator 61R and the left radiator 61L to a position more rearward than the right radiator 61R and the left radiator 61L. The right reinforcing frame 12R extends from a position more forward than the right radiator 61R to a position more rearward than the right radiator 61R. The left reinforcing frame 12L extends from a position more forward than the left radiator 61L to a position more rearward than the left radiator 61L.

The right radiator 61R and the left radiator 61L are each disposed more rearward than the front end 12a of the reinforcing frame 12. The entirety of the right radiator 61R is disposed more rearward than the front end 12a. The entirety of the left radiator 61L is disposed more rearward than the front end 12a. The right radiator 61R is disposed more rearward than the front end 12Ra of the right reinforcing frame 12R. The entirety of the right radiator 61R is disposed more rearward than the front end 12Ra. The left radiator 61L is disposed more rearward than the front end 12La of the left reinforcing frame 12L. The entirety of the left radiator 61L is disposed more rearward than the front end 12La.

The right radiator 61R does not overlap the front end 12a. The right radiator 61R does not overlap the front end 12Ra. The left radiator 61L does not overlap the front end 12a. The left radiator 61L does not overlap the front end 12La.

The right radiator 61R and the left radiator 61L are each disposed more forward than the rear end 12b of the reinforcing frame 12. The entirety of the right radiator 61R is disposed more forward than the rear end 12b. The entirety of the left radiator 61L is disposed more forward than the rear end 12b. The right radiator 61R is disposed more forward than the rear end 12Rb of the right reinforcing frame 12R. The entirety of the right radiator 61R is disposed more forward than the rear end 12Rb. The left radiator 61L is disposed more forward than the rear end 12Lb of the left reinforcing frame 12L. The entirety of the left radiator 61L is disposed more forward than the rear end 12Lb.

The right radiator 61R is disposed rightward of the reinforcing frame 12. The entirety of the right radiator 61R is disposed more rightward than the entirety of the reinforcing frame 12. The right radiator 61R is disposed rightward of the right reinforcing frame 12R. The entirety of the right radiator 61R is disposed more rightward than the entirety of the right reinforcing frame 12R. The right radiator 61R does not overlap the reinforcing frame 12 in vehicle front view. The right radiator 61R does not overlap the right reinforcing frame 12R in vehicle front view. The right radiator 61R does not overlap the reinforcing frame 12 in vehicle plan view. The right radiator 61R does not overlap the right reinforcing frame 12R in vehicle plan view.

The left radiator 61L is disposed leftward of the reinforcing frame 12. The entirety of the left radiator 61L is disposed more leftward than the entirety of the reinforcing frame 12. The left radiator 61L is disposed leftward of the left reinforcing frame 12L. The entirety of the left radiator 61L is disposed more leftward than the entirety of the left reinforcing frame 12L. The left radiator 61L does not overlap the reinforcing frame 12 in vehicle front view. The left radiator 61L does not overlap the left reinforcing frame 12L in vehicle front view. The left radiator 61L does not overlap the reinforcing frame 12 in vehicle plan view. The left radiator 61L does not overlap the left reinforcing frame 12L in vehicle plan view.

Each of the right radiator 61R and the left radiator 61L is separated from the connecting member 13. The right radiator 61R is not in contact with the connecting member 13. The left radiator 61L is not in contact with the connecting member 13.

The right radiator 61R and the left radiator 61L are each disposed higher than the connecting member 13. The right radiator 61R does not overlap the connecting member 13 in vehicle side view. The left radiator 61L does not overlap the connecting member 13 in vehicle side view.

Each of the right radiator 61R and the left radiator 61L is separated from the battery 41. The right radiator 61R is not in contact with the battery 41. The left radiator 61L is not in contact with the battery 41.

The right radiator 61R and the left radiator 61L are each disposed more forward than the battery 41. The entirety of the right radiator 61R is disposed more forward than the entirety of the battery 41. The entirety of the left radiator 61L is disposed more forward than the entirety of the battery 41. The right radiator 61R does not overlap the battery 41 in vehicle side view. The left radiator 61L does not overlap the battery 41 in vehicle side view.

At least a part of the right radiator 61R is disposed at the same height position as the battery 41. The upper end 61Ra of the right radiator 61R is at substantially the same height position as the upper end 41a of the battery 41. The lower end 61Ra of the right radiator 61R is disposed lower than the upper end 41a of the battery 41. The lower end 61Ra of the right radiator 61R is disposed higher than the lower end 41b of the battery 41.

At least a part of the left radiator 61L is disposed at the same height position as the battery 41. The upper end 61La of the left radiator 61L is disposed higher than the upper end 41a of the battery 41. The lower end 61La of the left radiator 61L is disposed lower than the upper end 41a of the battery 41. The lower end 61La of the left radiator 61L is disposed higher than the lower end 41b of the battery 41.

The right radiator 61R is disposed more rightward than the battery 41. The entirety of the right radiator 61R is disposed more rightward than the entirety of the battery 41. The right radiator 61R does not overlap the battery 41 in vehicle front view. The right radiator 61R does not overlap the battery 41 in vehicle plan view.

The left radiator 61L is disposed more leftward than the battery 41. The entirety of the left radiator 61L is disposed more leftward than the entirety of the battery 41. The left radiator 61L does not overlap the battery 41 in vehicle front view. The left radiator 61L does not overlap the battery 41 in vehicle plan view.

Each of the right radiator 61R and the left radiator 61L is separated from the power unit 51. The right radiator 61R is not in contact with the power unit 51. The left radiator 61L is not in contact with the power unit 51.

The right radiator 61R is disposed more forward than the power unit 51. The entirety of the right radiator 61R is disposed more forward than the entirety of the power unit 51. The right radiator 61R is disposed higher than the power unit 51. The entirety of the right radiator 61R is disposed higher than the entirety of the power unit 51. The right radiator 61R does not overlap the power unit 51 in vehicle side view. The right radiator 61R does not overlap the power unit 51 in vehicle front view. The right radiator 61R does not overlap the power unit 51 in vehicle plan view.

The left radiator 61L is disposed more forward than the power unit 51. The entirety of the left radiator 61L is disposed more forward than the entirety of the power unit 51. The left radiator 61L is disposed higher than the power unit 51. The entirety of the left radiator 61L is disposed higher than the entirety of the power unit 51. The left radiator 61L does not overlap the power unit 51 in vehicle side view. The left radiator 61L does not overlap the power unit 51 in vehicle front view. The left radiator 61L does not overlap the power unit 51 in vehicle plan view.

### <6. Side cover 35>

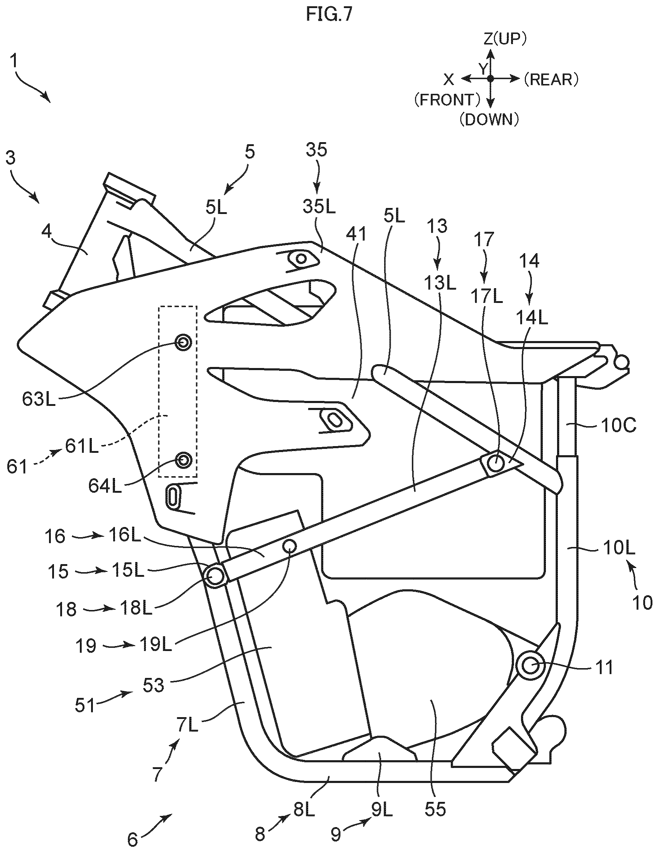

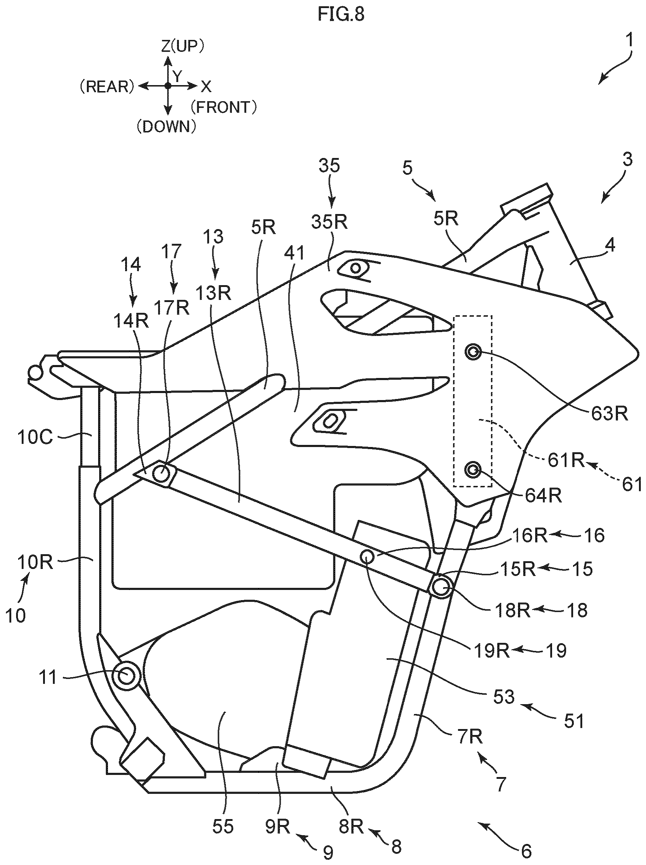

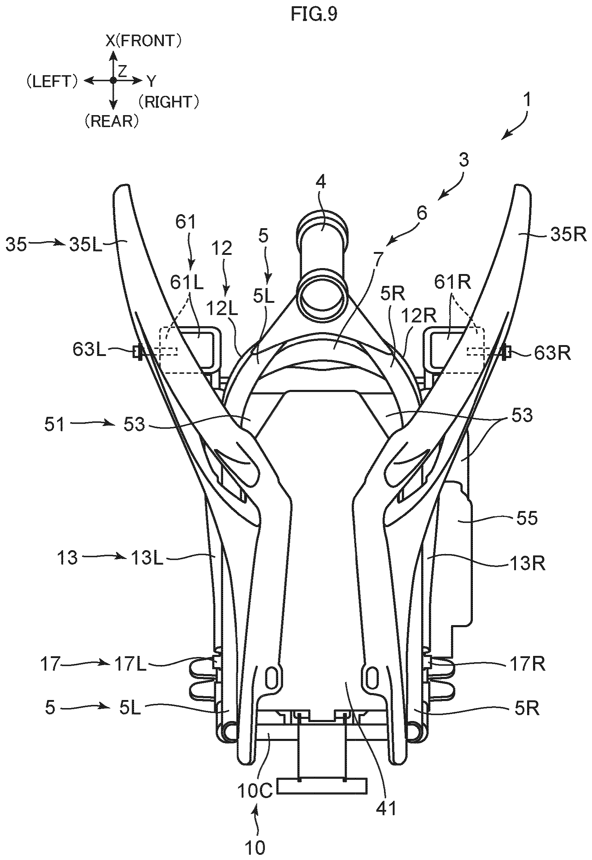

Refer to FIGS. 6 to 9. FIG. 7 is a left side view of the vehicle body frame 3, the battery 41, the power unit 51, the left radiator 61L, and the side cover 35. FIG. 8 is a right side view of the vehicle body frame 3, the battery 41, the power unit 51, the right radiator 61R, and the side cover 35. FIG. 9 is a plan view of the vehicle body frame 3, the battery 41, the power unit 51, the radiator 61, and the side cover 35.

The side cover 35 includes a right cover 35R and a left cover 35L. The left cover 35L is disposed leftward of the right cover 35R. The left cover 35L is disposed at substantially the same height position as the right cover 35R.

Each of the right cover 35R and the left cover 35L overlaps a part of the head pipe 4 in vehicle side view. Each of the right cover 35R and the left cover 35L extends to a position more forward than the head pipe 4. Each of the right cover 35R and the left cover 35L overlaps a part of the main frame 5 in vehicle side view. Each of the right cover 35R and the left cover 35L overlaps a part of the down frame 6 in vehicle side view. Each of the right cover 35R and the left cover 35L overlaps at least a part of the reinforcing frame 12 in vehicle side view. For example, each of the right cover 35R and the left cover 35L overlaps the entirety of the reinforcing frame 12 in vehicle side view. The right cover 35R and the left cover 35L are each disposed higher than the connecting member 13. The right cover 35R does not overlap the connecting member 13 in vehicle side view. The left cover 35L does not overlap the connecting member 13 in vehicle side view.

Each of the right cover 35R and the left cover 35L overlaps at least a part of the battery 41 in vehicle side view. The right cover 35R and the left cover 35L are each disposed higher than the power unit 51. The right cover 35R does not overlap the power unit 51 in vehicle side view. The left cover 35L does not overlap the power unit 51 in vehicle side view.

The right cover 35R is disposed rightward of the right radiator 61R. The right cover 35R overlaps at least a part of the right radiator 61R in vehicle side view. For example, the right cover 35R overlaps the entirety of the right radiator 61R in vehicle side view. The right cover 35R extends from a position more forward than the right radiator 61R to a position more rearward than the right radiator 61R.

The left cover 35L is disposed leftward of the left radiator 61L. The left cover 35L overlaps at least a part of the left radiator 61L in vehicle side view. For example, the left cover 35L overlaps the entirety of the left radiator 61L in vehicle side view. The left cover 35L extends from a position more forward than the left radiator 61L to a position more rearward than the left radiator 61L.

The right cover 35R is disposed rightward of the right radiator 61R in vehicle plan view. The right cover 35R overlaps at least a part of the right radiator 61R in vehicle plan view. The right cover 35R extends rightward and forward from the right radiator 61R in vehicle plan view. The right cover 35R extends rightward and forward from a position rightward of the right radiator 61R in vehicle plan view. The right cover 35R guides air to the right radiator 61R.

The left cover 35L is disposed leftward of the left radiator 61L in vehicle plan view. The left cover 35L overlaps at least a part of the left radiator 61L in vehicle plan view. The left cover 35L extends leftward and forward from the left radiator 61L in vehicle plan view. The left cover 35L extends leftward and forward from a position leftward of the left radiator 61L in vehicle plan view. The left cover 35L guides air to the left cover 35L.

The right cover 35R supports the right radiator 61R. The right cover 35R supports the right part of the right radiator 61R.

The straddled electric vehicle 1 includes fastening members 63R and 64R. Each of the fastening members 63R and 64R fastens the right cover 35R and the right radiator 61R. The fastening member 63R is attached to the upper part of the right radiator 61R. The fastening member 63R is disposed at substantially the same height position as the reinforcing frame 12. At least a part of the fastening member 63R overlaps the reinforcing frame 12 in vehicle side view. At least a part of the fastening member 63R overlaps the right reinforcing frame 12R in vehicle side view. The fastening member 64R is disposed below the fastening member 63R. The fastening member 64R is attached to the lower part of the right radiator 61R. At least a part of the fastening member 63R overlaps the front portion 7 in vehicle side view.

Similarly, the left cover 35L supports the left radiator 61L. The left cover 35L supports the left part of the left radiator 61L.

The straddled electric vehicle 1 includes fastening members 63L and 64L. Each of the fastening members 63L and 64L fastens the left cover 35L and the left radiator 61L. The fastening member 63L is attached to the upper part of the left radiator 61L. The fastening member 63L is disposed at substantially the same height position as the reinforcing frame 12. At least a part of the fastening member 63L overlaps the reinforcing frame 12 in vehicle side view. At least a part of the fastening member 63L overlaps the left reinforcing frame 12L in vehicle side view. The fastening member 64L is disposed below the fastening member 63L. The fastening member 64L is attached to the lower part of the left radiator 61L. At least a part of the fastening member 64L overlaps the front portion 7 in vehicle side view.

The right cover 35R is supported by the vehicle body frame 3. The right radiator 61R is supported by the vehicle body frame 3 via the right cover 35R. The right radiator 61R is not directly supported by the vehicle body frame 3. The right radiator 61R is indirectly supported by the vehicle body frame 3 via the right cover 35R.

The right radiator 61R is not in contact with the vehicle body frame 3. The right radiator 61R is not in contact with the down frame 6. The right radiator 61R is not in contact with the reinforcing frame 12. The right radiator 61R is not fastened to the vehicle body frame 3 with a bolt. The right radiator 61R is not fastened to the down frame 6 with a bolt. The right radiator 61R is not fastened to the reinforcing frame 12 with a bolt. The right radiator 61R is not attached to a bracket connected to the vehicle body frame 3. The right radiator 61R is not attached to a bracket connected to the down frame 6. The right radiator 61R is not attached to a bracket connected to the reinforcing frame 12. In other words, the straddled electric vehicle 1 does not include a bracket interposed between the right radiator 61R and the vehicle body frame 3. The straddled electric vehicle 1 does not include a bracket interposed between the right radiator 61R and the down frame 6. The straddled electric vehicle 1 does not include a bracket interposed between the right radiator 61R and the reinforcing frame 12.

Similarly, the left cover 35L is supported by the vehicle body frame 3. The left radiator 61L is supported by the vehicle body frame 3 via the left cover 35L. The left radiator 61L is not directly supported by the vehicle body frame 3. The left radiator 61L is indirectly supported by the vehicle body frame 3 via the left cover 35L.

The left radiator 61L is not in contact with the vehicle body frame 3. The left radiator 61L is not in contact with the down frame 6. The left radiator 61L is not in contact with the reinforcing frame 12. The left radiator 61L is not fastened to the vehicle body frame 3 with a bolt. The left radiator 61L is not fastened to the down frame 6 with a bolt. The left radiator 61L is not fastened to the reinforcing frame 12 with a bolt. The left radiator 61L is not attached to a bracket connected to the vehicle body frame 3. The left radiator 61L is not attached to a bracket connected to the down frame 6. The left radiator 61L is not attached to a bracket connected to the reinforcing frame 12. In other words, the straddled electric vehicle 1 does not include a bracket interposed between the left radiator 61L and the vehicle body frame 3. The straddled electric vehicle 1 does not include a bracket interposed between the left radiator 61L and the down frame 6. The straddled electric vehicle 1 does not include a bracket interposed between the left radiator 61L and the reinforcing frame 12.

Each of the right cover 35R and the left cover 35L is made of resin. Each of the right cover 35R and the left cover 35L is not made of metal. Each of the right cover 35R and the left cover 35L has lower rigidity than the vehicle body frame 3. Each of the right cover 35R and the left cover 35L has lower rigidity than the down frame 6. Each of the right cover 35R and the left cover 35L has lower rigidity than the reinforcing frame 12. Each of the right cover 35R and the left cover 35L is more flexible than the vehicle body frame 3. Each of the right cover 35R and the left cover 35L is more flexible than the down frame 6. Each of the right cover 35R and the left cover 35L is more flexible than the reinforcing frame 12.

For example, each of the right cover 35R and the left cover 35L has lower rigidity than the right radiator 61R. For example, each of the right cover 35R and the left cover 35L has lower rigidity than the left radiator 61L. Each of the right cover 35R and the left cover 35L is more flexible than the right radiator 61R. Each of the right cover 35R and the left cover 35L is more flexible than the left radiator 61L.

### <7. Procedure for attaching and detaching battery 41 to and from straddled electric vehicle 1>

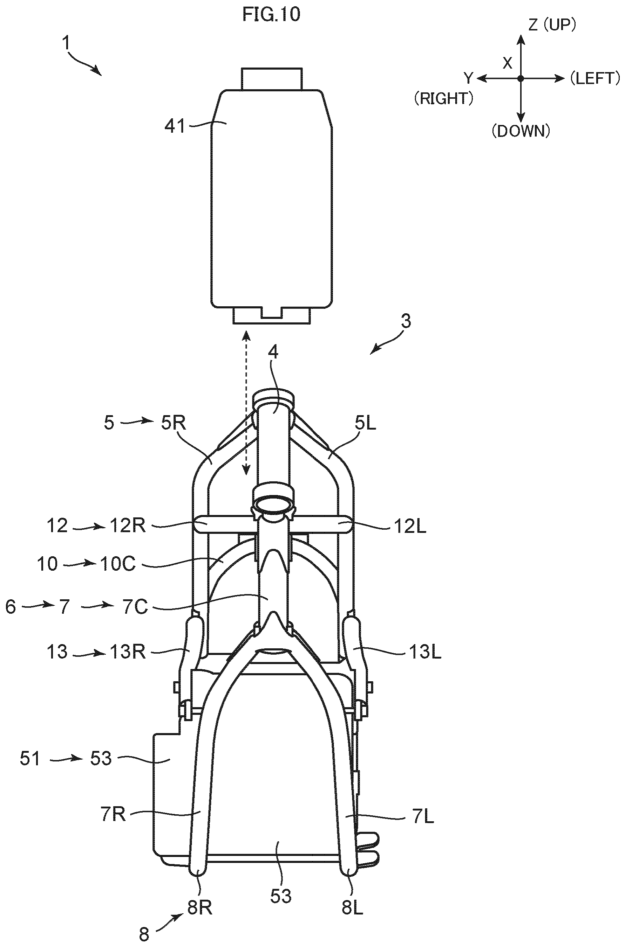

FIG. 10 is a front view for explaining a procedure of attaching and detaching the battery 41 to and from the vehicle body frame 3. The procedure of detaching the battery 41 from the straddled electric vehicle 1 includes a first step and a second step.

### First step

The side cover 35 is detached from the vehicle body frame 3. Specifically, the right cover 35R is detached from the vehicle body frame 3. The left cover 35L is detached from the vehicle body frame 3. Even after the right cover 35R is detached from the vehicle body frame 3, the right radiator 61R is still supported by the right cover 35R. Even after the left cover 35L is detached from the vehicle body frame 3, the left radiator 61L is still supported by the left cover 35L. Therefore, the right radiator 61R and the left radiator 61L are also detached from the vehicle body frame 3.

### Second step

The battery 41 is detached from the vehicle body frame 3. Specifically, coupling between a bracket (not illustrated) and the battery 41 is released. Then, the battery 41 is moved upward with respect to the main frame 5. The battery 41 passes between the right main frame 5R and the left main frame 5L. The battery 41 passes between the right reinforcing frame 12R and the left reinforcing frame 12L. The battery 41 passes between the right connecting member 13R and the left connecting member 13L. The battery 41 moves to a position above the main frame 5. Thereby, the battery 41 is detached from the straddled electric vehicle 1.

FIG. 10 illustrates the battery 41 detached from the vehicle body frame 3. The entirety of the battery 41 is located outside the straddled electric vehicle 1. For example, the entirety of the battery 41 is located higher than the main frame 5.

The procedure of attaching the battery 41 to the vehicle body frame 3 is reverse to the procedure of detaching the battery 41 from the vehicle body frame 3. The procedure of attaching the battery 41 to straddled electric vehicle 1 includes a third step and a fourth step.

### Third step

The battery 41 is mounted on the vehicle body frame 3. Specifically, the battery 41 is moved from a position above the main frame 5. The battery 41 is moved toward the main frame 5. The battery 41 moves downward with respect to the main frame 5. The battery 41 passes between the right main frame 5R and the left main frame 5L. The battery 41 passes between the right reinforcing frame 12R and the left reinforcing frame 12L. The battery 41 passes between the right connecting member 13R and the left connecting member 13L. The battery 41 is installed between the right main frame 5R and the left main frame 5L. Thereby, the battery 41 is mounted on the straddled electric vehicle 1.

### Fourth step

The side cover 35 is attached to the vehicle body frame 3. Specifically, the right cover 35R is attached to the vehicle body frame 3. The left cover 35L is attached to the vehicle body frame 3. The right radiator 61R is still supported by the right cover 35R. The left radiator 61L is still supported by the left cover 35L. Therefore, the right radiator 61R and the left radiator 61L are also attached to the vehicle body frame 3.

As described above, when the battery 41 moves in the up-down direction Z with respect to the main frame 5, the battery 41 is attached to and detached from the straddled electric vehicle 1.

For reference, a procedure of attaching and detaching the power unit 51 to and from the straddled electric vehicle 1 will be briefly described.

The procedure of detaching the power unit 51 from the straddled electric vehicle 1 includes a fifth step and a sixth step. In the fifth step, the connecting member 13 is detached from the main frame 5 and the down frame 6. Thereby, the connecting member 13 allows the power unit 51 to move in the transverse direction Y with respect to the main frame 5 and the down frame 6. In the sixth step, the power unit 51 is moved in the transverse direction Y with respect to the main frame 5 and the down frame 6. Thereby, the power unit 51 is detached from the main frame 5 and the down frame 6.

The procedure of attaching the power unit 51 to the straddled electric vehicle 1 includes a seventh step and an eighth step. In the seventh step, the power unit 51 is moved in the transverse direction Y with respect to the main frame 5 and the down frame 6. Thereby, the power unit 51 is mounted on the straddled electric vehicle 1. In the eighth step, the connecting member 13 is attached to the main frame 5 and the down frame 6. Thereby, the connecting member 13 prohibits the power unit 51 to move in the transverse direction Y with respect to the main frame 5 and the down frame 6.

### <8. Effects>

The straddled electric vehicle 1 includes the head pipe 4, the main frame 5, the down frame 6, and the reinforcing frame 12. The main frame 5 extends rearward from the head pipe 4. The down frame 6 extends downward from the head pipe 4. The down frame 6 is disposed below the main frame 5 in vehicle side view. The reinforcing frame 12 is connected to the main frame 5 and the down frame 6. Therefore, the reinforcing frame 12 improves the rigidity of the main frame 5 and the down frame 6.

The straddled electric vehicle 1 includes the battery 41, the right radiator 61R, and the left radiator 61L. At least a part of the battery 41 overlaps the main frame 5 in vehicle side view. The right radiator 61R is disposed rightward of the reinforcing frame 12. The left radiator 61L is disposed leftward of the reinforcing frame 12. Here, at least a part of the right radiator 61R overlaps the reinforcing frame 12 in vehicle side view. Therefore, interference between the right radiator 61R and other components of the straddled electric vehicle 1 is appropriately prevented. For example, interference between the right radiator 61R and the front fork 21 is appropriately prevented. Similarly, at least a part of the left radiator 61L overlaps the reinforcing frame 12 in vehicle side view. Thus, interference between the left radiator 61L and other components of the straddled electric vehicle 1 is also appropriately prevented. For example, interference between the left radiator 61L and the front fork 21 is appropriately prevented. Thus, the right radiator 61R and the left radiator 61L are each installed at appropriate positions.

As described above, the straddled electric vehicle 1 includes the right radiator 61R and the left radiator 61L installed at appropriate positions.

The reinforcing frame 12 has the front end 12a. The entirety of the right radiator 61R is disposed more rearward than the front end 12a of the reinforcing frame 12. Therefore, interference between the right radiator 61R and other components of the straddled electric vehicle 1 is more appropriately prevented. Similarly, the entirety of the left radiator 61L is disposed more rearward than the front end 12a of the reinforcing frame 12. Therefore, interference between the left radiator 61L and other components of the straddled electric vehicle 1 is also more appropriately prevented. Thus, the right radiator 61R and the left radiator 61L are each installed at more appropriate positions.

The right radiator 61R does not overlap the reinforcing frame 12 in vehicle front view. Therefore, interference between the right radiator 61R and the reinforcing frame 12 is reliably prevented. Similarly, the left radiator 61L does not overlap the reinforcing frame 12 in vehicle front view. Therefore, interference between the left radiator 61L and the reinforcing frame 12 is reliably prevented. Thus, the right radiator 61R and the left radiator 61L are each installed at more appropriate positions.

The entirety of the right radiator 61R is disposed more rightward than the entirety of the reinforcing frame 12. Therefore, the right radiator 61R does not suitably overlap the reinforcing frame 12 in vehicle front view.

The entirety of the left radiator 61L is disposed more leftward than the entirety of the reinforcing frame 12. Therefore, the left radiator 61L does not suitably overlap the reinforcing frame 12 in vehicle front view.

The right radiator 61R does not overlap the battery 41 in vehicle front view. Therefore, interference between the right radiator 61R and the battery 41 is reliably prevented. Similarly, the left radiator 61L does not overlap the battery 41 in vehicle front view. Therefore, interference between the left radiator 61L and the battery 41 is reliably prevented.

The entirety of the right radiator 61R is disposed more rightward than the entirety of the battery 41. Therefore, the right radiator 61R does not suitably overlap the battery 41 in vehicle front view.

The entirety of the left radiator 61L is disposed more leftward than the entirety of the battery 41. Therefore, the left radiator 61L does not suitably overlap the battery 41 in vehicle front view.

The right radiator 61R is disposed more forward than the battery 41. When the straddled electric vehicle 1 travels, the air flows rearward. As described above, the right radiator 61R does not overlap the battery 41 in vehicle front view. Therefore, when the straddled electric vehicle 1 travels, the right radiator 61R allows the air to flow toward the battery 41. Similarly, the left radiator 61L is disposed more forward than the battery 41. As described above, the left radiator 61L does not overlap the battery 41 in vehicle front view. Therefore, when the straddled electric vehicle 1 travels, the left radiator 61L allows the air to flow toward the battery 41. Thus, when the straddled electric vehicle 1 travels, the air smoothly flows on the surface of the battery 41. Thus, when the straddled electric vehicle 1 travels, the battery 41 can be efficiently cooled.

The entirety of the right radiator 61R is disposed more forward than the entirety of the battery 41. Therefore, interference between the right radiator 61R and the battery 41 is reliably prevented.

The entirety of the left radiator 61L is disposed more forward than the entirety of the battery 41. Therefore, interference between the left radiator 61L and the battery 41 is reliably prevented.

The head pipe 4 has the lower end 4b. The right radiator 61R has an upper end 61Ra. The upper end 61Ra of the right radiator 61R is disposed higher than the lower end 4b of the head pipe 4. Therefore, the right radiator 61R is disposed at a relatively high position. Thus, the right radiator 61R is less likely damaged. For example, the right radiator 61R is less likely hit by stone chips scattered when the straddled electric vehicle 1 travels.

The left radiator 61L has an upper end 61La. The upper end 61La of the left radiator 61L is disposed higher than the lower end 4b of the head pipe 4. Therefore, the left radiator 61L is disposed at a relatively high position. Thus, the left radiator 61L is less likely damaged. For example, the left radiator 61L is less likely hit by stone chips scattered when the straddled electric vehicle 1 travels.

The straddled electric vehicle 1 includes the right cover 35R. The right cover 35R is disposed rightward of the right radiator 61R. Therefore, for example, when the straddled electric vehicle 1 falls down, the right cover 35R first receives an impact from the ground. For example, when the straddled electric vehicle 1 falls down, the right cover 35R receives an impact from the ground before the right radiator 61R receives the impact from the ground. When the right cover 35R receives an impact, the right cover 35R easily bends. When the right cover 35R receives an impact, the right cover 35R bends before the right radiator 61R is deformed. Here, the right radiator 61R is supported by the right cover 35R. Therefore, when the right cover 35R bends, the position of the right radiator 61R easily varies. When the right cover 35R bends, for example, the position of the right radiator 61R with respect to the vehicle body frame 3 easily varies. When the right cover 35R bends, for example, the position of the right radiator 61R with respect to the reinforcing frame 12 easily varies. When the right cover 35R bends, for example, the position of the right radiator 61R with respect to the down frame 6 easily varies. Thus, even when the right cover 35R receives an impact, the right radiator 61R does not receive the impact properly. Even when the right cover 35R receives an impact, the right radiator 61R does not receive the entire impact. The right cover 35R softens the impact applied to the right radiator 61R. Even when the straddled electric vehicle 1 falls down, it is difficult to crush the right radiator 61R between the vehicle body frame 3 and the ground. Even when the straddled electric vehicle 1 falls down, it is difficult to crush the right radiator 61R between the reinforcing frame 12 and the ground. Even when the straddled electric vehicle 1 falls down, it is difficult to crush the right radiator 61R between the down frame 6 and the ground. That is, the right radiator 61R is less likely damaged. As described above, the right radiator 61R is suitably protected by the right cover 35R.

Similarly, the straddled electric vehicle 1 includes the left cover 35L. The left cover 35L is disposed leftward of the left radiator 61L. The left radiator 61L is supported by the left cover 35L. Therefore, the left radiator 61L is suitably protected by the left cover 35L.

The entirety of the right radiator 61R overlaps the right cover 35R in vehicle side view. Therefore, the right radiator 61R is more suitably protected by the right cover 35R.

The entirety of the left radiator 61L overlaps the left cover 35L in vehicle side view. Therefore, the left radiator 61L is more suitably protected by the left cover 35L.

The reinforcing frame 12 includes the right reinforcing frame 12R and the left reinforcing frame 12L. The right reinforcing frame 12R is connected to the main frame 5 and the down frame 6. The left reinforcing frame 12L is connected to the main frame 5 and the down frame 6. Therefore, each of the right reinforcing frame 12R and the left reinforcing frame 12L improves the rigidity of the main frame 5 and the down frame 6. Thus, the reinforcing frame 12 suitably improves the rigidity of the main frame 5 and the down frame 6.

The right radiator 61R is disposed rightward of the right reinforcing frame 12R. The left radiator 61L is disposed leftward of the left reinforcing frame 12L. Here, the right radiator 61R overlaps the right reinforcing frame 12R in vehicle side view. Therefore, interference between the right radiator 61R and other components of the straddled electric vehicle 1 is appropriately prevented. Similarly, the left radiator 61L overlaps the left reinforcing frame 12L in vehicle side view. Thus, interference between the left radiator 61L and other components of the straddled electric vehicle 1 is appropriately prevented. Thus, the right radiator 61R and the left radiator 61L are each installed at appropriate positions.

The right reinforcing frame 12R has the front end 12Ra. The entirety of the right radiator 61R is disposed more rearward than the front end 12Ra of the right reinforcing frame 12R. Therefore, interference between the right radiator and other components of the straddled electric vehicle is more appropriately prevented. Similarly, the left reinforcing frame 12L has the front end 12La. The entirety of the left radiator 61L is disposed more rearward than the front end 12La of the left reinforcing frame 12L. Therefore, interference between the left radiator 61L and other components of the straddled electric vehicle 1 is also more appropriately prevented. Thus, the right radiator 61R and the left radiator 61L are each installed at more appropriate positions.

The main frame 5 includes the right main frame 5R and the left main frame 5L. The left main frame 5L is disposed leftward of the right main frame 5R. The right reinforcing frame 12R is connected to the right main frame 5R and the down frame 6. Therefore, the right reinforcing frame 12R improves the rigidity of the right main frame 5R and the down frame 6. The left reinforcing frame 12L is connected to the left main frame 5L and the down frame 6. Therefore, the left reinforcing frame 12L improves the rigidity of the left main frame 5L and the down frame 6. Thus, even when the main frame 5 includes the right main frame 5R and the left main frame 5L, the reinforcing frame 12 suitably improves the rigidity of the main frame 5 and the down frame 6. Rather, when the main frame 5 includes the right main frame 5R and the left main frame 5L, the right reinforcing frame 12R and the left reinforcing frame 12L are very useful. When the main frame 5 includes the right main frame 5R and the left main frame 5L, the right reinforcing frame 12R and the left reinforcing frame 12L are very useful for improving the rigidity of the main frame 5.

The entirety of the right radiator 61R is disposed more rightward than the entirety of the right main frame 5R. Therefore, interference between the right radiator 61R and the main frame 5 is reliably prevented. Similarly, the entirety of the left radiator 61L is disposed more leftward than the entirety of the left main frame 5L. Therefore, interference between the left radiator 61L and the main frame 5 is also reliably prevented.

The battery 41 is disposed leftward of the right main frame 5R and rightward of the left main frame 5L. When the battery 41 is disposed leftward of the right main frame 5R and rightward of the left main frame 5L, the separation distance between the right main frame 5R and the left main frame 5L in the transverse direction Y is relatively large. However, even when the battery 41 is disposed leftward of the right main frame 5R and rightward of the left main frame 5L, the main frame 5 has appropriate rigidity. This is because the right reinforcing frame 12R is connected to the right main frame 5R and the down frame 6, and the left reinforcing frame 12L is connected to the left main frame 5L and the down frame 6. Rather, when the battery 41 is disposed leftward of the right main frame 5R and rightward of the left main frame 5L, the right reinforcing frame 12R and the left reinforcing frame 12L are very useful. When the battery 41 is disposed leftward of the right main frame 5R and rightward of the left main frame 5L, the right reinforcing frame 12R and the left reinforcing frame 12L are very useful for improving the rigidity of the main frame 5.

The battery 41 is movable upward with respect to the right main frame 5R and the left main frame 5L. When the battery 41 is movable upward with respect to the right main frame 5R and the left main frame 5L, the separation distance between the right main frame 5R and the left main frame 5L in the transverse direction Y is even larger. However, even when the battery 41 is movable upward with respect to the right main frame 5R and the left main frame 5L, the main frame 5 has appropriate rigidity. This is because the right reinforcing frame 12R is connected to the right main frame 5R and the down frame 6, and the left reinforcing frame 12L is connected to the left main frame 5L and the down frame 6. Rather, when the battery 41 is movable upward with respect to the right main frame 5R and the left main frame 5L, the right reinforcing frame 12R and the left reinforcing frame 12L are very useful. When the battery 41 is movable upward with respect to the right main frame 5R and the left main frame 5L, the right reinforcing frame 12R and the left reinforcing frame 12L are very useful for improving the rigidity of the main frame 5.

The straddled electric vehicle 1 includes the power unit 51. The power unit 51 is disposed below the battery 41. The right radiator 61R is disposed higher than and more forward than the power unit 51. Therefore, interference between the right radiator 61R and the power unit 51 is appropriately prevented. Similarly, the left radiator 61L is disposed higher than and more forward than the power unit 51. Therefore, interference between the left radiator 61L and the power unit 51 is appropriately prevented. Thus, the right radiator 61R and the left radiator 61L are each installed at appropriate positions.

Each of the right radiator 61R and the left radiator 61L cools the power unit 51. Therefore, the power unit 51 is appropriately cooled.

The straddled electric vehicle 1 includes the front fork 21 and the front wheel 22. The front fork 21 is supported by the head pipe 4. The front wheel 22 is supported by the front fork 21. As described above, the right radiator 61R overlaps the reinforcing frame 12 in vehicle side view. Therefore, interference between the right radiator 61R and the front fork 21 is appropriately prevented. Similarly, the left radiator 61L overlaps the reinforcing frame 12 in vehicle side view. Therefore, interference between the left radiator 61L and the front fork 21 is appropriately prevented. Thus, the right radiator 61R and the left radiator 61L are each installed at appropriate positions.

### <9. Modified embodiments>

The present invention is not limited to the above embodiment, and can be modified as follows.
(1) In the embodiment, each of the right radiator 61R and the left radiator 61L cooled the power unit 51. However, the present invention is not limited thereto. For example, at least one of the right radiator 61R and the left radiator 61L may not cool the power unit 51. For example, at least one of the right radiator 61R and the left radiator 61L may cool the battery 41. For example, at least one of the right radiator 61R and the left radiator 61L may cool the battery 41 and the power unit 51.
(2) In the embodiment, the entirety of the right radiator 61R was disposed more rightward than the entirety of the main frame 5. The entirety of the right radiator 61R was disposed more rightward than the entirety of the right main frame 5R. The right radiator 61R does not overlap the main frame 5 in vehicle front view. The right radiator 61R does not overlap the right main frame 5R in vehicle front view. However, the present invention is not limited thereto. For example, at least a part of the right radiator 61R may be disposed more rightward than the entirety of the main frame 5. At least a part of the right radiator 61R may be disposed more rightward than the entirety of the right main frame 5R. The right radiator 61R may overlap the main frame 5 in vehicle front view. The right radiator 61R may overlap the right main frame 5R in vehicle front view.
   Similarly, in the embodiment, the entirety of the left radiator 61L was disposed more leftward than the entirety of the main frame 5. The entirety of the left radiator 61L was disposed more leftward than the entirety of the left main frame 5L. The left radiator 61L does not overlap the main frame 5 in vehicle front view. The left radiator 61L does not overlap the left main frame 5L in vehicle front view. However, the present invention is not limited thereto. For example, at least a part of the left radiator 61L may be disposed more leftward than the entirety of the main frame 5. At least a part of the left radiator 61L may be disposed more leftward than the entirety of the left main frame 5L. The left radiator 61L may overlap the main frame 5 in vehicle front view. The left radiator 61L may overlap the left main frame 5L in vehicle front view.
(3) In the embodiment, the entirety of the right radiator 61R was disposed more rightward than the entirety of the reinforcing frame 12. The entirety of the right radiator 61R was disposed more rightward than the entirety of the right reinforcing frame 12R. The right radiator 61R does not overlap the reinforcing frame 12 in vehicle front view. The right radiator 61R does not overlap the right reinforcing frame 12R in vehicle front view. However, the present invention is not limited thereto. For example, at least a part of the right radiator 61R may be disposed more rightward than the entirety of the reinforcing frame 12. At least a part of the right radiator 61R may be disposed more rightward than the entirety of the right reinforcing frame 12R. The right radiator 61R may overlap the reinforcing frame 12 in vehicle front view. The right radiator 61R may overlap the right reinforcing frame 12R in vehicle front view.
   Similarly, in the embodiment, the entirety of the left radiator 61L was disposed more leftward than the entirety of the reinforcing frame 12. The entirety of the left radiator 61L was disposed more leftward than the entirety of the left reinforcing frame 12L. The left radiator 61L does not overlap the reinforcing frame 12 in vehicle front view. The left radiator 61L does not overlap the left reinforcing frame 12L in vehicle front view. However, the present invention is not limited thereto. For example, at least a part of the left radiator 61L may be disposed more leftward than the entirety of the reinforcing frame 12. At least a part of the left radiator 61L may be disposed more leftward than the entirety of the left reinforcing frame 12L. The left radiator 61L may overlap the reinforcing frame 12 in vehicle front view. The left radiator 61L may overlap the left reinforcing frame 12L in vehicle front view.
(4) In the embodiment, the entirety of the right radiator 61R was disposed more rightward than the entirety of the battery 41. The right radiator 61R does not overlap the battery 41 in vehicle front view. However, the present invention is not limited thereto. For example, at least a part of the right radiator 61R may be disposed more rightward than the entirety of the battery 41. The right radiator 61R may overlap the battery 41 in vehicle front view.
   Similarly, in the embodiment, the entirety of the left radiator 61L was disposed more leftward than the entirety of the battery 41. The left radiator 61L does not overlap the battery 41 in vehicle front view. However, the present invention is not limited thereto. For example, at least a part of the left radiator 61L may be disposed more leftward than the entirety of the battery 41. The left radiator 61L may overlap the battery 41 in vehicle front view.
(5) In the embodiment, the right radiator 61R is not attached to a bracket connected to the vehicle body frame 3. In other words, the straddled electric vehicle 1 does not include a bracket interposed between the right radiator 61R and the vehicle body frame 3. However, the present invention is not limited thereto. The right radiator 61R may be attached to the first bracket connected to the vehicle body frame 3. In other words, the straddled electric vehicle 1 may include the first bracket interposed between the right radiator 61R and the vehicle body frame 3. The right radiator 61R may be supported by at least one of the right cover 35R and the first bracket.

Similarly, in the embodiment, the left radiator 61L is not attached to a bracket connected to the vehicle body frame 3. In other words, the straddled electric vehicle 1 does not include a bracket interposed between the left radiator 61L and the vehicle body frame 3. However, the present invention is not limited thereto. The left radiator 61L may be attached to the second bracket connected to the vehicle body frame 3. In other words, the straddled electric vehicle 1 may include the second bracket interposed between the left radiator 61L and the vehicle body frame 3. The left radiator 61L may be supported by at least one of the left cover 35L and the second bracket.

The present modified embodiment will be specifically described. Each of the first bracket and the second bracket is fastened to the vehicle body frame 3 with a bolt. For example, at least one of the first bracket and the second bracket is fastened to the down frame 6 with a bolt. For example, at least one of the first bracket and the second bracket is fastened to the reinforcing frame 12 with a bolt. The right radiator 61R is fastened to the first bracket with a bolt. The left radiator 61L is fastened to the second bracket with a bolt. The second bracket may be integrated with the first bracket. The second bracket may be inseparable from the first bracket. Alternatively, the second bracket may be a separate body from the first bracket.

Here, each of the first bracket and the second bracket preferably has lower rigidity than the vehicle body frame 3. Each of the first bracket and the second bracket preferably has lower rigidity than the down frame 6. Each of the first bracket and the second bracket preferably has lower rigidity than the reinforcing frame 12. Each of the first bracket and the second bracket is preferably more flexible than the vehicle body frame 3. Each of the first bracket and the second bracket is preferably more flexible than the down frame 6. Each of the first bracket and the second bracket is preferably more flexible than the reinforcing frame 12.

The first bracket preferably has lower rigidity than the right radiator 61R. The first bracket is preferably more flexible than the right radiator 61R. The second bracket preferably has lower rigidity than the left radiator 61L. The second bracket is preferably more flexible than the left radiator 61L.

The first bracket may be made of resin or metal. The second bracket may be made of resin or metal.

According to the present modified embodiment, when the right radiator 61R and the first bracket receive an impact, the first bracket is deformed before the right radiator 61R is deformed. Therefore, the first bracket softens the impact applied to the right radiator 61R. Thus, the right radiator 61R is less likely damaged. Thus, the right radiator 61R is suitably protected. Similarly, when the left radiator 61L and the second bracket receive an impact, the second bracket is deformed before the left radiator 61L is deformed. Therefore, the second bracket softens the impact applied to the left radiator 61L. Thus, the left radiator 61L is less likely damaged. Thus, the left radiator 61L is suitably protected.

(6) In the embodiment, the reinforcing frame 12 included the right reinforcing frame 12R and the left reinforcing frame 12L. However, the present invention is not limited thereto. For example, the reinforcing frame 12 may include only one of the right reinforcing frame 12R and the left reinforcing frame 12L. In other words, the other of the right reinforcing frame 12R and the left reinforcing frame 12L may be omitted. For example, the reinforcing frame 12 may include a central reinforcing frame (not illustrated). For example, the reinforcing frame 12 may include a central reinforcing frame in addition to the right reinforcing frame 12R and the left reinforcing frame 12L. Alternatively, the reinforcing frame 12 may include a central reinforcing frame instead of the right reinforcing frame 12R and the left reinforcing frame 12L. The reinforcing frame 12 may include only a central reinforcing frame. Here, the central reinforcing frame is connected to the main frame 5 and the down frame 6. The central reinforcing frame extends rearward from the down frame 6. Also by these modified embodiments, the reinforcing frame 12 appropriately reinforces the main frame 5 and the down frame 6.

(7) In the embodiment, the reinforcing frame 12 had a rod shape or a pipe shape. However, the present invention is not limited thereto. At least a part of the reinforcing frame 12 may have a plate shape. For example, at least a part of the reinforcing frame 12 may have a plate shape perpendicular to the transverse direction Y. A portion of the battery 41 overlapping the reinforcing frame 12 in vehicle side view is referred to as "protection area". According to the present modified embodiment, it is easy to expand the protection area of the battery 41. Thus, the reinforcing frame 12 is more suitably protected by the battery 41.

(8) In the embodiment, the reinforcing frame 12 was connected to the central front portion 7C. However, the present invention is not limited thereto. The reinforcing frame 12 may be connected to the right front portion 7R. The right reinforcing frame 12R may be connected to the right front portion 7R. The reinforcing frame 12 may be connected to the left front portion 7L. The left reinforcing frame 12L may be connected to the left front portion 7L.

(9) In the embodiment, the reinforcing frame 12 is connected to the front portion 7. However, the present invention is not limited thereto. The reinforcing frame 12 may be connected to the lower portion 8.

(10) In the embodiment, the reinforcing frame 12 extended in the longitudinal direction X in vehicle side view. However, the present invention is not limited thereto. The reinforcing frame 12 may extend in the up-down direction Z in vehicle side view.

(11) In the embodiment, the reinforcing frame 12 was curved. However, the present invention is not limited thereto. The reinforcing frame 12 may extend linearly. The right reinforcing frame 12R may extend linearly. The left reinforcing frame 12L may extend linearly.

(12) In the embodiment, the number of front wheels 22 was one. However, the present invention is not limited thereto. The number of front wheels 22 may be two. In the embodiment, the number of rear wheels 32 was one. The present invention is not limited thereto. The number of rear wheels 32 may be two.

(13) In the embodiment, an off-road type vehicle as the straddled electric vehicle 1 has been exemplified. However, the present invention is not limited thereto. For example, the straddled electric vehicle 1 may be changed to vehicles of other types, such as a scooter-type, a street type, a sport type, or an all-terrain vehicle.

(14) In the embodiment and each modified embodiment described in the above (1) to (13), each configuration may be appropriately changed by further replacing or combining each configuration with another modified embodiment.

### Reference Signs List

- 1: straddled electric vehicle
- 3: vehicle body frame
- 4: head pipe
- 5: main frame
- 5R: right main frame
- 5L: left main frame
- 6: down frame
- 7: front portion
- 7C: central front portion
- 7R: right front portion
- 7L: left front portion
- 8: lower portion
- 8R: right lower portion
- 8L: left lower portion
- 10: pivot frame
- 11: pivot shaft portion
- 12: reinforcing frame
- 13: connecting member
- 13R: right connecting member
- 13L: left connecting member
- 14, 14R, 14L: first site
- 15, 15R, 15L: second site
- 16, 16R, 16L: third site
- 17, 17R, 17L: fastening member
- 18, 18R, 18L: fastening member
- 19, 19R, 19L: fastening member
- 22: front wheel
- 33: rear wheel
- 35: side cover
- 35R: right cover
- 35L: left cover
- 41: battery
- 51: power unit
- 53: inverter
- 55: electric motor
- 61: radiator
- 61R: right radiator
- 61Ra: upper end of right radiator
- 61Rb: lower end of right radiator
- 61L: left radiator
- 61La: upper end of left radiator
- 61Lb: lower end of left radiator
- 63R, 64R: fastening member of right radiator
- 63L, 64L: fastening member of left radiator
- X: longitudinal direction of straddled electric vehicle
- Y: transverse direction of straddled electric vehicle
- Z: up-down direction of straddled electric vehicle

## Claims

1. A straddled electric vehicle comprising:
a head pipe;
a main frame extending rearward from the head pipe;
a down frame extending downward from the head pipe and disposed below the main frame in side view of the straddled electric vehicle;
a reinforcing frame connected to the main frame and the down frame;
a battery at least a part of which overlaps the main frame in the side view of the straddled electric vehicle;
a right radiator disposed rightward of the reinforcing frame; and
a left radiator disposed leftward of the reinforcing frame, wherein
at least a part of the right radiator overlaps the reinforcing frame in the side view of the straddled electric vehicle, and
at least a part of the left radiator overlaps the reinforcing frame in the side view of the straddled electric vehicle.

2. The straddled electric vehicle according to claim 1, wherein
the reinforcing frame has a front end,
an entirety of the right radiator is disposed more rearward than the front end of the reinforcing frame, and
an entirety of the left radiator is disposed more rearward than the front end of the reinforcing frame.

3. The straddled electric vehicle according to claim 1 or 2, wherein
the right radiator does not overlap with the reinforcing frame in front view of the straddled electric vehicle, and
the left radiator does not overlap with the reinforcing frame in the front view of the straddled electric vehicle.

4. The straddled electric vehicle according to any one of claims 1 to 3, wherein
an entirety of the right radiator is disposed more rightward than an entirety of the reinforcing frame, and
an entirety of the left radiator is disposed more leftward than the entirety of the reinforcing frame.

5. The straddled electric vehicle according to any one of claims 1 to 4, wherein
the right radiator does not overlap with the battery in front view of the straddled electric vehicle, and
the left radiator does not overlap with the battery in the front view of the straddled electric vehicle.

6. The straddled electric vehicle according to any one of claims 1 to 5, wherein
an entirety of the right radiator is disposed more rightward than an entirety of the battery, and
an entirety of the left radiator is disposed more leftward than the entirety of the battery.

7. The straddled electric vehicle according to any one of claims 1 to 6, wherein
an entirety of the right radiator is disposed more forward than an entirety of the battery, and
an entirety of the left radiator is disposed more forward than the entirety of the battery.

8. The straddled electric vehicle according to any one of claims 1 to 7, wherein
the head pipe has a lower end,
the right radiator has an upper end,
the left radiator has an upper end,
the upper end of the right radiator is disposed higher than the lower end of the head pipe, and
the upper end of the left radiator is disposed higher than the lower end of the head pipe.

9. The straddled electric vehicle according to any one of claims 1 to 8, wherein
the straddled electric vehicle comprises
a right cover disposed rightward of the right radiator, and
a left cover disposed leftward of the left radiator,
the right radiator is supported by the right cover, and
the left radiator is supported by the left cover.

10. The straddled electric vehicle according to claim 9, wherein
an entirety of the right radiator overlaps the right cover in the side view of the straddled electric vehicle, and
an entirety of the left radiator overlaps the left cover in the side view of the straddled electric vehicle.

11. The straddled electric vehicle according to any one of claims 1 to 10, wherein
the reinforcing frame includes
a right reinforcing frame connected to the main frame and the down frame, and
a left reinforcing frame connected to the main frame and the down frame,
the right radiator is disposed rightward of the right reinforcing frame,
the left radiator is disposed leftward of the left reinforcing frame,
the right radiator overlaps the right reinforcing frame in the side view of the straddled electric vehicle, and
the left radiator overlaps the left reinforcing frame in the side view of the straddled electric vehicle.

12. The straddled electric vehicle according to claim 11, wherein
the main frame includes
a right main frame, and
a left main frame disposed leftward of the right main frame,
the right reinforcing frame is connected to the right main frame and the down frame,
the left reinforcing frame is connected to the left main frame and the down frame,
an entirety of the right radiator is disposed more rightward than an entirety of the right main frame, and
an entirety of the left radiator is disposed more leftward than an entirety of the left main frame.

13. The straddled electric vehicle according to claim 12, wherein
the battery is disposed leftward of the right main frame and rightward of the left main frame.

14. The straddled electric vehicle according to claim 12 or 13, wherein
the battery is movable upward with respect to the right main frame and the left main frame.

15. The straddled electric vehicle according to any one of claims 1 to 14, wherein
the straddled electric vehicle comprises a power unit disposed below the battery,
the right radiator is disposed higher than and more forward than the power unit, and
the left radiator is disposed higher than and more forward than the power unit.
